# EUROPEAN PATENT APPLICATION

(11) **EP 2 527 682 A2**
(43) Date of publication of application: **28.11.2012**
(21) Application number: 12169215.6
(22) Date of filing: 24.05.2012
(51) Int. Cl.: F16F 15/123

(54) **Torque fluctuation absorbing apparatus**

(30) Priority: 27.05.2011 JP 2011119380
(71) Applicant: AISIN SEIKI KABUSHIKI KAISHA, Kariya-shi, Aichi-ken 448-8650 (JP)
(72) Inventor: Saeki, Tomohiro, Kariya-shi, Aichi 448-8650 (JP); Nishio, Yusaku, Kariya-shi, Aichi 448-8650 (JP); Kawazoe, Hiroshi, Kariya-shi, Aichi 448-8650 (JP); Suezaki, Hiroaki, Kariya-shi, Aichi 448-8650 (JP); Nakagaito, Satoshi, Kariya-shi, Aichi 448-8650 (JP); Sekine, Tsutomu, Kariya-shi, Aichi 448-8650 (JP)
(74) Representative: TBK

(57) **Abstract**

A torque fluctuation absorbing apparatus that includes a first assembly that absorbs a fluctuating torque generated between a first rotating shaft and a second rotating shaft that are arranged coaxially, a first end of the first assembly being connected to the first rotating shaft from the second rotating shaft side by a first connecting member, a second assembly that absorbs a fluctuating torque generated between the first rotating shaft and the second rotating shaft, the second assembly being disposed more toward the second rotating shaft side than the first connecting member and a second end thereof being connected to the second rotating shaft, and a second connecting member that connects a second end of the first assembly to a first end of the second assembly.

## Description

### TECHNICAL FIELD

This disclosure relates to a torque fluctuation absorbing apparatus which absorbs a fluctuating torque generated between rotating shafts.

### BACKGROUND DISCUSSION

A known torque fluctuation absorbing apparatus is provided on a drivetrain between an engine and a transmission, and absorbs (restrains) a fluctuating torque generated by the engine and the transmission. The known torque fluctuation absorbing apparatus includes a damper portion that absorbs the fluctuating torque by means of a spring force, a hysteresis portion that absorbs (restrains) the fluctuating torque by means of a hysteresis torque generated by friction or the like, and a limiter portion that generates slippage when a torsion of the rotating shafts is beyond the absorption capabilities of the damper portion and the hysteresis portion.

If the damper portion is provided at a radially outward location of the torque fluctuation absorbing apparatus, an advantage is achieved in that a large torsion angle can be obtained. If the damper portion is provided at a radially outward location of the torque fluctuation absorbing apparatus, an input-side member of the apparatus must be connected to a crank shaft of the engine by a bolt from the transmission side at a location that is more radially inward than the damper portion. In order to make this connection with a bolt from the transmission side, a hole through which the bolt is inserted is provided in a constituent member of the torque fluctuation absorbing apparatus (for example, see JP 2009-293652 A (hereinafter referred to as Reference 1)).

However, there are cases in which a hole through which the bolt is inserted cannot be provided in a constituent member due to the structure of the torque fluctuation absorbing apparatus. For example, under conditions in which the apparatus cannot be made large in the radial direction, if another damper portion or a limiter portion is provided at a location that is more radially inward than the damper portion, there are cases in which the bolt insertion hole cannot be provided in a constituent member. Even if the bolt insertion hole is provided in a constituent member, the strength of the constituent member may become insufficient due to the hole.

A need thus exists for a torque fluctuation absorbing apparatus which can be connected to a crank shaft of an engine by a bolt from the transmission side without providing a bolt insertion hole.

### SUMMARY

According to an aspect of this disclosure, a torque fluctuation absorbing apparatus includes a first assembly that absorbs a fluctuating torque generated between a first rotating shaft and a second rotating shaft that are arranged coaxially, a first end of the first assembly being connected to the first rotating shaft from the second rotating shaft side by a first connecting member, a second assembly that absorbs a fluctuating torque generated between, the first rotating shaft and the second rotating shaft, the second assembly being disposed more toward the second rotating shaft side than the first connecting member and a second end thereof being connected to the second rotating shaft, and a second connecting member that connects a second end of the first assembly to a first end of the second assembly.

The first assembly includes a first damper portion that absorbs a fluctuating torque generated between the first rotating shaft and the second rotating shaft by an elastic force, and the second assembly includes a second damper portion that absorbs a fluctuating torque generated between the first rotating shaft and the second rotating shaft by an elastic force, or a limiter portion that generates slippage when a fluctuating torque is beyond the absorption capabilities of the first damper portion.

The second assembly is disposed more radially inward than the first damper portion of the first assembly.

A second end of the second assembly is connected to the second rotating shaft by spline-engagement.

The first end of the second assembly is disposed more toward the second rotating shaft side than the second end of the first assembly, and the second connecting member is a bolt that connects the first end of the second assembly to the second end of the first assembly.

The first end of the second assembly is disposed more radially inward than the second end of the first assembly, and the second connecting member includes an inner spline formed on an inner circumferential surface of the second end of the first assembly and an outer spline that is formed on an outer circumferential surface of the first end of the second assembly and spline-engages with the inner spline.

The second connecting member includes a plurality of protruding portions that are formed on the second end of the first assembly and protrude toward the second rotating shaft, and a plurality of holes formed on the first end of the second assembly and through which the protruding portions are inserted. The protruding portions engage with the holes so that their movement in the circumferential direction and the radial direction is controlled relative to the first end of the second assembly.

The protruding portions each include a claw portion that hooks onto the first end of the second assembly at a distal end that penetrates through the holes, and the protruding portions are elastically deformable in the radial direction or the circumferential direction inside the holes. The movement in the axial direction of the first end of the second assembly is controlled by a main body of the second end of the first assembly and the claw portions.

The protruding portions are forked protruding portions whose distal ends are split into two in the radial or circumferential direction, and the claw portion is formed on both sides in the radial direction or the circumferential direction of the distal end that penetrates through the holes in each forked protruding portion.

The protruding portions include a groove on a surface in the radial direction or the circumferential direction of the distal end that penetrates through the holes, and a stopper that is fitted onto the groove. The movement in the axial direction of the first end of the second assembly is controlled by a main body of the second end of the first assembly and the stoppers.

The second connecting member includes a pin member that includes a jaw portion that penetrates through the first end of the second assembly and the second end of the first assembly and hooks onto the first end of the second assembly, a forked pin portion whose distal end is split into two, and a claw portion at each distal end of the forked pin portion that hooks onto the second end of the first assembly. The movement in the axial direction of the first end of the second assembly is controlled by a main body of the second end of the first assembly and the jaw portion.

The apparatus further comprises a spacer that is disposed between the second end of the first assembly and the first end of the second assembly and includes a hole through which the protruding portions are inserted.

The apparatus further comprises an elastic member that is disposed between a stepped portion of the second rotating shaft and the second end of the second assembly, and biases the second end of the second assembly toward the first rotating shaft.

The first assembly includes a hysteresis portion that alleviates a fluctuating torque generated between the first rotating shaft and the second rotating shaft by means of a hysteresis torque, the hysteresis portion includes a thrust member sandwiched between the first rotating shaft and the second rotating shaft, and the thrust member includes a retaining portion that prevents the second assembly from falling out from the protruding portions.

The second connecting member includes a plurality of protruding portions that are formed on the first end of the second assembly and protrude toward the first rotating shaft, and a plurality of holes that are formed on the second end of the first assembly and through which the protruding portions are inserted. The protruding portions engage with the holes so that their movement in the circumferential direction and the radial direction is controlled relative to the second end of the first assembly.

According to this disclosure, by dividing the torque fluctuation absorbing apparatus into a first assembly and a second assembly and configuring the assemblies so that the second end of the first assembly can be connected to the first end of the second assembly, a work hole through which a first connecting member for connecting to a first rotating member can be eliminated from the torque fluctuation absorbing apparatus, and thus the strength of the apparatus can be ensured.

### BRIEF DESCRIPTION OF THE DRAWINGS

The foregoing and additional features and characteristics of this disclosure will become more apparent from the following detailed description considered with reference to the accompanying drawings, wherein:

FIG. 1 is a plane view schematically illustrating a structure of a torque fluctuation absorbing apparatus according to a first embodiment disclosed here;

FIG. 2 is a section view taken on line X-X' illustrated in FIG. 1;

FIG. 3 is a section view taken on line Y-Y' illustrated in FIG. 1;

FIG. 4 is an enlarged partial section view schematically illustrating a connection portion of a first assembly and a second assembly in the torque fluctuation absorbing apparatus according to a second embodiment disclosed here;

FIG. 5 schematically illustrates the torque fluctuation absorbing apparatus according to a third embodiment disclosed here, where (A) is an enlarged partial section view schematically illustrating a connection portion of a first assembly and a second assembly, (B) is a partial plane view schematically illustrating a structure of a center plate of the first assembly from the viewpoint of arrow z, and (C) is a partial plane view schematically illustrating a structure of a variation of the center plate;

FIG. 6 is an enlarged partial section view schematically illustrating a connection potion of a first assembly and a second assembly in the torque fluctuation absorbing apparatus according to a fourth embodiment disclosed here;

FIG. 7 is an enlarged partial section view schematically illustrating a connection portion of a first assembly and a second assembly in the torque fluctuation absorbing apparatus according to a fifth embodiment disclosed here;

FIG. 8 schematically illustrates a connection portion of a first assembly and a second assembly in the torque fluctuation absorbing apparatus according to a sixth embodiment disclosed here, where (A) is an enlarged partial section view before connection and (B) is an enlarged partial section view after connection;

FIG. 9 schematically illustrates a connection portion of a first assembly and a second assembly in the torque fluctuation absorbing apparatus according to a seventh embodiment disclosed here, where (A) is an enlarged partial section view before connection, (B) is an enlarged partial section view after connection, and (C) is a partial plane view schematically illustrating a structure of a center plate of the first assembly from the viewpoint of arrow z;

FIG. 10 schematically illustrates a connection portion of a first assembly and a second assembly in the torque fluctuation absorbing apparatus according to an eighth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z;

FIG. 11 schematically illustrates a connection portion of a first assembly and a second assembly in the torque fluctuation absorbing apparatus according to a ninth embodiment disclosed here, where (A) is an enlarged partial section view before connection and (B) is an enlarged partial section view after connection;

FIG. 12 schematically illustrates a connection portion of a first assembly and a second assembly in the torque fluctuation, absorbing apparatus according to a tenth embodiment disclosed here, where (A) is an enlarged partial section view before connection and (B) is an enlarged partial section view after connection;

FIG. 13 schematically illustrates a connection portion of a first assembly and a second assembly in the torque fluctuation absorbing apparatus according to an eleventh embodiment disclosed here, where (A) is an enlarged partial section view before connection, (B) is an enlarged partial section view after connection, and (C) is a partial plane view schematically illustrating a structure of a center plate of the first assembly from the viewpoint of arrow z;

FIG. 14 schematically illustrates a connection portion of a first assembly and a second assembly in the torque fluctuation absorbing apparatus according to a twelfth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z;

FIG. 15 schematically illustrates a connection portion of a first assembly and a second assembly in the torque fluctuation absorbing apparatus according to a thirteenth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z;

FIG. 16 schematically illustrates a connection portion of a first assembly and a second assembly in the torque fluctuation absorbing apparatus according to a fourteenth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z;

FIG. 17 schematically illustrates a connection portion of a first assembly and a second assembly in the torque fluctuation absorbing apparatus according to a fifteenth embodiment disclosed here, where (A) is an enlarged partial section view, and (B) is a partial plane view schematically illustrating a structure when a center plate of the first assembly and a C-ring are combined from the viewpoint of arrow z;

FIG. 18 schematically illustrates a connection portion of a first assembly and a second assembly in the torque fluctuation absorbing apparatus according to a sixteenth embodiment disclosed here, where (A) is an enlarged partial section view, and (B) is a partial plane view schematically illustrating a structure when a center plate of the first assembly and a C-ring are combined from the viewpoint of arrow z ;

FIG. 19 schematically illustrates a connection portion of a first assembly and a second assembly in the torque fluctuation absorbing apparatus according to a seventeenth embodiment disclosed here, where (A) is an enlarged partial section view before connection, (B) is an enlarged partial section view during connection, and (C) is an enlarged partial section view after connection;

FIG. 20 is an enlarged partial section view of an engaged portion of a ring member and a center plate in the torque fluctuation absorbing apparatus according to an eighteenth embodiment disclosed here;

FIG. 21 is an enlarged partial section view schematically illustrating a connection portion of a first assembly and a second assembly in the torque fluctuation absorbing apparatus according to a nineteenth embodiment disclosed here;

FIG. 22 is an enlarged partial section view schematically illustrating a connection portion of a first assembly and a second assembly in the torque fluctuation absorbing apparatus according to a twentieth embodiment disclosed here;

FIG. 23 is an enlarged partial section view schematically illustrating a connection portion of a first assembly and a second assembly in the torque fluctuation absorbing apparatus according to a twenty first embodiment disclosed here;

FIG. 24 is a section view schematically illustrating a structure of the torque fluctuation absorbing apparatus according to a twenty second embodiment disclosed here;

FIG. 25 is a section view schematically illustrating a structure of the torque fluctuation absorbing apparatus according to a twenty third embodiment disclosed here;

FIG. 26 is a section view schematically illustrating a structure of the torque fluctuation absorbing apparatus according to a twenty fourth embodiment disclosed here;

FIG. 27 is a section view schematically illustrating a structure of the torque fluctuation absorbing apparatus according to a twenty fifth embodiment disclosed here; and

FIG. 28 is a section view schematically illustrating a structure of the torque fluctuation absorbing apparatus according to a twenty sixth embodiment disclosed here.

### DETAILED DESCRIOPTION

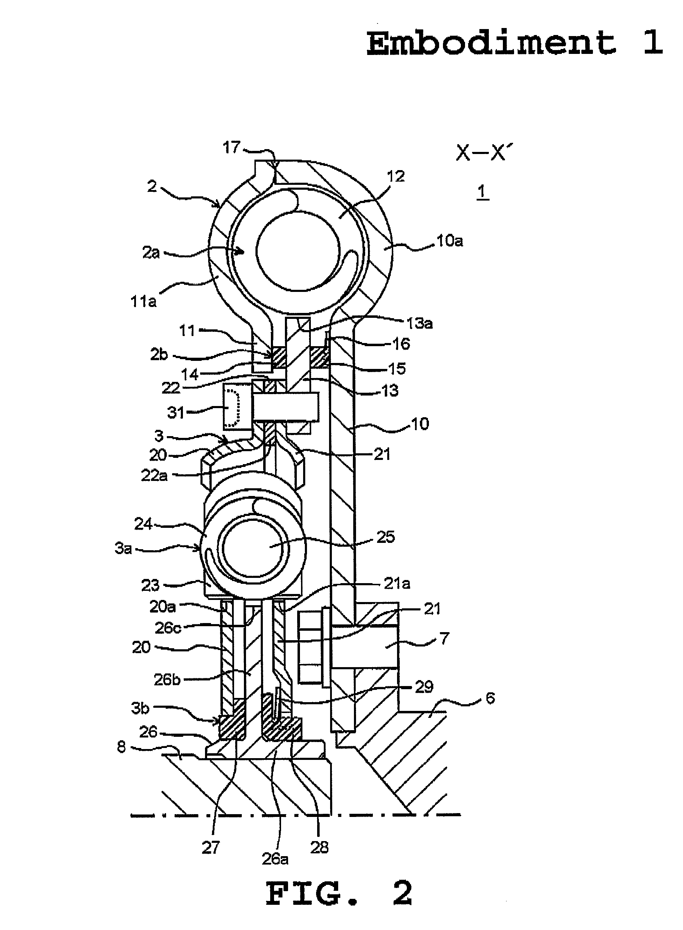

According to an aspect of this disclosure, a torque fluctuation absorbing apparatus includes a first assembly (2 in FIG. 2) that absorbs a fluctuating torque generated between a first rotating shaft (6 in FIG. 2) and a second rotating shaft (8 in FIG. 2) that are arranged coaxially, a first end (10 in FIG. 2) of the first assembly being connected to the first rotating shaft from the second rotating shaft side by a first connecting member (7 in FIG. 2), a second assembly (3 in FIG. 2) that absorbs a fluctuating torque generated between the first rotating shaft and the second rotating shaft, the second assembly being disposed more toward the second rotating shaft side than the first connecting member and a second end (26 in FIG. 2) thereof being connected to the second rotating shaft, and a second connecting member (31 in FIG. 2) that connects a second end (13 in FIG. 2) of the first assembly to a first end (20, 21, 22 in FIG. 2) of the second assembly. According to this aspect, in order to reduce the torque fluctuation absorbing apparatus in the axial direction and to decrease the costs, a torque fluctuation absorbing apparatus which can be directly attached to a crank shaft of an engine rather than attaching to the crank shaft via a member such as a flywheel or a drive plate can be obtained.

In the present application, when numerals referring to the drawings are inserted, they are solely for the purpose of facilitating understanding, and are not intended to limit to the illustrated embodiment.

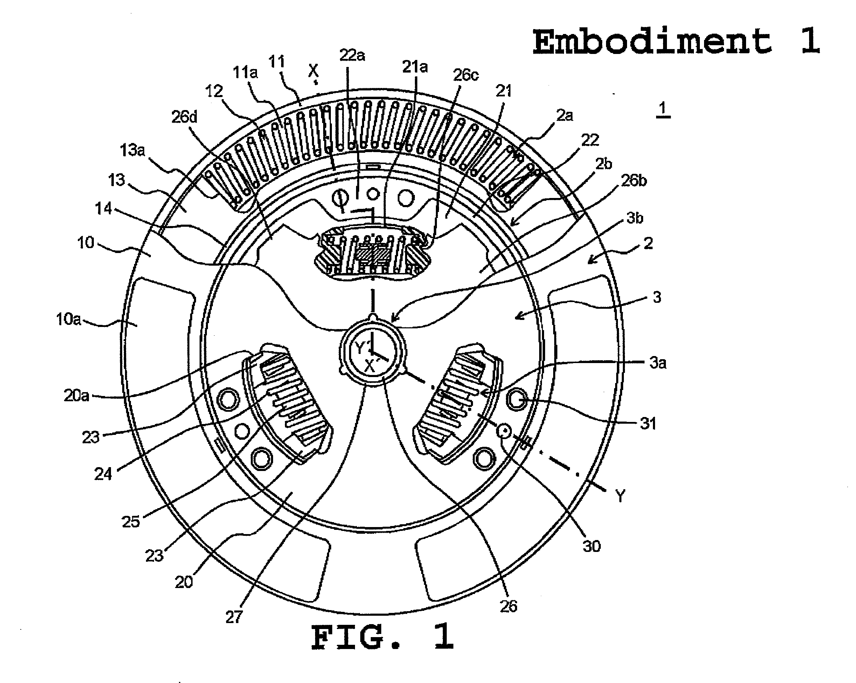

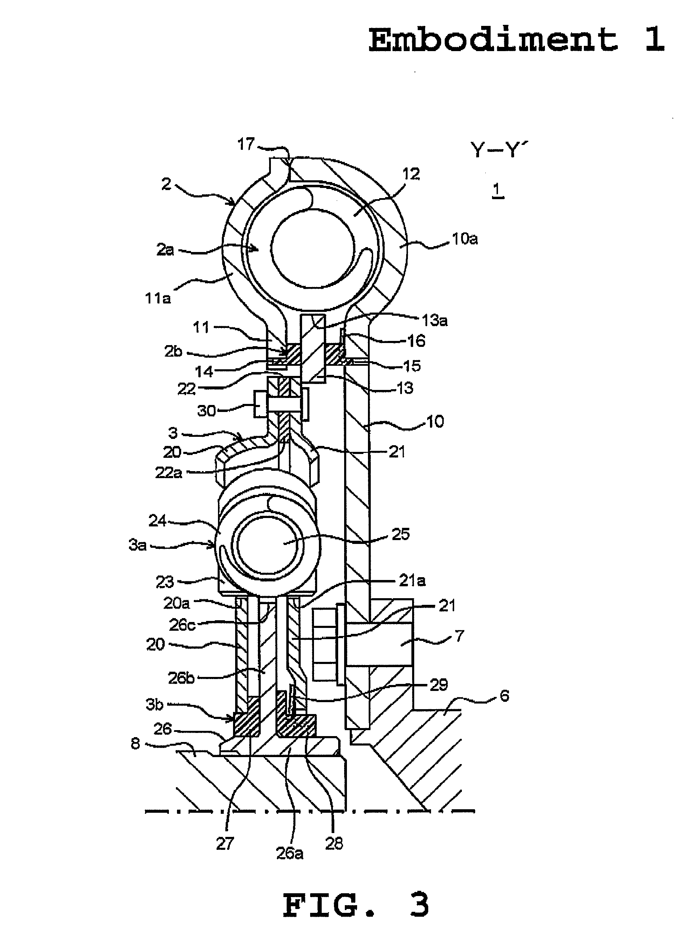

A first embodiment of the torque fluctuation absorbing apparatus disclosed here will be explained with reference to the drawings. FIG. 1 is a plane view schematically illustrating a structure of a torque fluctuation absorbing apparatus according to a first embodiment disclosed here. FIG. 2 is a section view taken on line x-x' illustrated in FIG. 1. FIG. 3 is a section view taken on line Y-Y' illustrated in FIG. 1.

The torque fluctuation absorbing apparatus 1 according to the first embodiment is provided between a crank shaft 6 of an engine (not illustrated) and an input shaft 8 of a transmission (not illustrated) so as to absorb (restrain) a fluctuating torque generated between the crank shaft 6 and the input shaft 8. The torque fluctuation absorbing apparatus 1 includes a first assembly 2 that absorbs a fluctuating torque generated between the crank shaft 6 and the input shaft 8 and is connected to the crank shaft 6 by a bolt 7, and a second assembly 3 that absorbs a fluctuating torque generated between the crank shaft 6 and the input shaft 8 and is connected to the first assembly 2 and the input shaft 8.

In the first embodiment, the first assembly 2 is attached to the crank shaft 6 of the engine, the second assembly 3 is subsequently attached, and then the input shaft 8 of the transmission is mounted thereafter.

In the first assembly 2, a first end (corresponding to a side plate 10) of the drivetrain is connected to the crank shaft 6 by the bolt 7 from the transmission side (left side in FIG. 2) at a radially inward location. The first assembly 2 includes, at a radially outward location, a damper portion 2a and a hysteresis portion 2b that function to alleviate torsion. The damper portion 2a absorbs torque fluctuations between the crank shaft 6 and the input shaft 8 by means of an elastic force. The hysteresis portion 2b alleviates torque fluctuations between the crank shaft 6 and the input shaft 8 by means of a hysteresis torque (for example, frictional force). The hysteresis portion 2b is set more radially inward than the damper portion 2a. In the first assembly 2, a second end (corresponding to a center plate 13) of the drivetrain is connected to a first end (corresponding to side plates 20 and 21 and a ring member 22) of the drivetrain in the second assembly 3 by a bolt 31 at a location that is more radially inward than the hysteresis portion 2b and more radially outward than the bolt 7. After the first assembly 2 is connected to the crank shaft 6 by the bolt 7, the second assembly 3 is connected by the bolt 31. Thereby, a hole through which the bolt 7 is inserted does not need to be provided in the second assembly 3.

In the second assembly 3, a first end of the drive train (corresponding to side plates 20 and 21 and a ring member 22) is connected to the second end of the drivetrain (corresponding to the center plate 13) in the first assembly 2 by the bolt 31. The first end (corresponding to side plates 20 and 21 and a ring member 22) of the second assembly 3 is disposed more toward the transmission side (left side in FIG. 2) than the second end of the first assembly 2 (corresponding to the center plate 13). The second assembly 3 is disposed more toward the transmission side (left side in FIG. 2) than the bolt 7. The second assembly 3 includes, at a location that is more radially inward than the bolt 31, a damper portion 3a and a hysteresis portion 3b that function to absorb torsion. The damper portion 3a absorbs torque fluctuations between the crank shaft 6 and the input shaft 8 by means of an elastic force. It does not matter whether the damper portion 3a absorbs torque fluctuations before the damper portion 2a of the first assembly 2. The hysteresis portion 3b alleviates torque fluctuations between the crank shaft 6 and the input shaft 8 by means of a hysteresis torque (for example, frictional force). The hysteresis portion 3b is set more radially inward than the damper portion 3a. In the second assembly 3, the second end (corresponding to a hub member 26) of the drivetrain is connected by spline-engagement to the input shaft 8 at a location that is more radially inward than the hysteresis portion 2b.

The first assembly 2 includes the following main constituent members: a side plate 10, a side plate 11, a coil spring 12, a center plate 13, thrust members 14 and 15, a disc spring 16, and a weld portion 17.

The side plate 10 is a xing-shaped member, and is a constituent member of the damper portion 2a and the hysteresis portion 2b in the first assembly 2. The side plate 10 is connected at an inner circumferential portion thereof to the crank shaft 6 by the bolt 7. The bolt 7 can be rotated from the transmission side (left side in FIG. 2) using a tool. An outer circumferential portion of the side plate 10 includes a bag-shaped accommodating portion 10a for accommodating the coil spring 12 of the damper portion 2a in the first assembly 2. The end faces on both sides in the circumferential direction of the accommodating portion 10a can contact with and separate from the ends of the coil spring 12. When no torsion is being generated in the damper portion 2a, the circumferential end faces of the accommodating portion 10a contact both ends of the coil spring 12, and when torsion is being generated in the damper portion 2a, the circumferential end faces contact one end of the coil spring 12. The side plate 10 is formed so as to cover the radially outward side of the damper portion 2a. The end of the side plate 10 on the side plate 11 side is closely adhered to the side plate 11 across the entire circumference, and is fixed to the side plate 11 by the weld portion 17. The side plate 10 supports an outer circumferential end of a. disc spring 29 at the hysteresis portion 3b that is circumferentially inward relative to the damper portion 2a. The side plate 10 engages with the thrust member 15 so that it cannot rotate but can move axially (see FIG. 3).

The side plate 11 is a ring-shaped member, and is a constituent member of the damper portion 2a and the hysteresis portion 2b in the first assembly 2. An outer circumferential portion of the side plate 11 is closely adhered to the side plate 10 across the entire circumference, and is fixed to the side plate 10 by the weld portion 17. Thereby, the side plate 11 rotates integrally with the side plate 10. The side plate 11 includes, at an intermediate portion thereof, a bag-shaped accommodating portion 11a for accommodating the coil spring 12 of the damper portion 2a in the first assembly 2. The end faces on both sides in the circumferential direction of the accommodating portion 11a can contact with and separate from the ends of the coil spring 12. When no torsion is being generated in the damper portion 2a, the circumferential end faces of the accommodating portion 11a contact both ends of the coil spring 12, and when torsion is being generated in the damper portion 2a, the circumferential end faces contact one end of the coil spring 12. The side plate 11 engages with the thrust member 14 at the hysteresis portion 2b that is circumferentially inward than the damper portion 2a, so that the side plate 11 cannot rotate but can move axially (see FIG. 3).

The coil spring 12 is accommodated in the accommodating portions 10a and 11a of the side plates 10 and 11 and a window portion 13a of the center plate 13, and is in separatable contact with the accommodating portions l0a and 11a at its ends and the window portion 13a. The coil spring 12 contracts when torsion (torsion between the side plates 10 and 11 and the center plate 13) is generated in the damper potion 2a. An arc spring that is curved in the circumferential direction may be used as the coil spring 12 so as to realize a large torsion.

The center plate 13 is a ring-shaped member, and is a constituent member of the damper portion 2a and the hysteresis portion 2b in the first assembly 2. The center plate 13 is connected at an inner circumferential portion thereof to first end (the side plates 20 and 21 and the ring member 22) of the second assembly 3 by the bolt 31 (see FIG. 2). Thereby, the center plate 13 rotates integrally with the side plates 20 and 21 and the ring member 22. The center plate 13 is formed so as not to conflict with a rivet 30 that connects the side plates 20 and 21 and the ring member 22 (see FIG. 3). An outer circumferential portion of the center plate 13 includes a cutout window portion 13a for accommodating the coil spring 12 of the damper portion 2a. The end faces on both sides in the circumferential direction of the window portion 13a can contact with and separate from the coil spring 12. When no torsion is being generated in the damper portion 2a, the circumferential end faces of the window portion 13a contact both ends of the coil spring 12, and when torsion is being generated in the damper portion 2a, the circumferential end faces contact one end of the coil spring 12. The center plate 13 is slidably sandwiched by the thrust members 14 and 15 at the hysteresis portion 2b which is an intermediate portion that is more radially inward than the damper portion 2a and more radially outward than the bolt 31.

The thrust member 14 is a ring-shaped member, and is a constituent part of the hysteresis portion 2b in the first assembly 2. The thrust member 14 is disposed between the side plate 11 and the center plate 13. The thrust member 14 engages with the side plate 11 so that it cannot rotate but can move axially, and the thrust member 14 is slideably pressed against a flange 26b (see FIG. 3).

The thrust member 15 is a ring-shaped member, and is a constituent part of the hysteresis portion 2b in the first assembly 2. The thrust member 15 is disposed between the disc spring 16 and the center plate 13. The thrust member 15 is biased toward the center plate 13 by the disc spring 16. The thrust member 15 is slidably pressed against the center plate 13. The thrust member 15 engages with the disc spring 16 so that it cannot rotate but can move axially (see FIG. 2). The thrust member 15 engages with the side plate 10 so that it cannot rotate but can move axially (see FIG. 3).

The disc spring 16 is a disc-shaped spring that biases the thrust member 15 toward the center plate 13, and is a constituent part of the hysteresis portion 2b. The disc spring 16 is disposed between the thrust member 15 and the side plate 10. The disc spring 16 engages at an inner circumferential end thereof with the thrust member 15 so that it cannot rotate but can move axially. The disc spring 16 is supported at its outer circumferential end by the side plate 10, and biases the thrust member 15 toward the center plate 13 at its inner circumferential end.

The weld portion 17 is a portion that welds the side plate 10 and the side plate 11 to each other, The weld portion 17 is formed across the entire circumference along an outer circumference of a portion at which the side plate 10 and the side plate 11 join together.

The second assembly 3 includes the following main constituent members: a side plate 20, a side plate 21, a ring member 22, a seat member 23, a coil spring 24, a cushion member 25, a hub member 26, thrust members 27 and 28, a disc spring 29, and a rivet 30.

The side plate 20 is a ring-shaped member disposed on the transmission side (left side in FIG. 2) of a flange 26b of the hub member 26, and is a constituent member of the damper portion 3a and the hysteresis portion 3b in the second assembly 3. The side plate 20 is integrally fixed on an outer circumferential portion thereof to the ring member 22 and the side plate 21 by the rivet 30 (see FIG. 3). The side plate 20 is connected to the ring member 22, the side plate 21, and the center plate 13 by the bolt 31 at a portion that is displaced in the circumferential direction from the rivet 30 (see FIG. 2). The side plate 20 includes, in the damper portion 3a which is an intermediate portion, a window portion 20a for accommodating the coil spring 24 and the seat member 23. The end face in the circumferential direction of the window portion 20a is in separatable contact with the seat member 23. In the hysteresis portion 3b that is more radially inward than the damper portion 3a, the side plate 20 engages with the thrust member 27 so that it cannot rotate but can move axially. The side plate 20 is rotatably supported at its inner circumferential end by the hub member 26 (hub portion 26a) via the thrust member 27.

The side plate 21 is a ring-shaped member disposed on the engine side (right side in FIG. 2) of the flange 26b of the hub member 26, and is a constituent member of the damper portion 3a and the hysteresis portion 3b in the second assembly 3. The side plate 21 is integrally fixed on an outer circumferential portion thereof to the ring member 22 and the side plate 20 by the rivet 30 (see FIG. 3). The side plate 21 is connected to the ring member 22, the side plate 20, and the center plate 13 by the bolt 31 at a portion that is displaced in the circumferential direction from the rivet 30 (see FIG. 2). The side plate 21 includes, in the damper portion 3a which is an intermediate portion, a window portion 21a for accommodating the coil spring 24 and the seat member 23. The end face in the circumferential direction of the window portion 21a is in separatable contact with the seat member 23. In the hysteresis portion 3b that is more radially inward than the damper portion 3a, the side plate 21 supports an outer circumferential end of the disc spring 29. The side plate 21 engages with the thrust member 28 so that it cannot rotate but can move axially. The side plate 21 is rotatably supported at its inner circumferential end by the hub member 26 (hub portion 26a) via the thrust member 28.

The ring member 22 is a ring-shaped member disposed between the side plates 20 and 21. The ring member 22 includes, at its inner circumferential portion, a plurality of convex portions 22a that protrude radially inward. The convex portions 22a control the torsion of the damper portion 3a in the second assembly 3 at a prescribed angle, and they control the torsion of the damper portion 3a by hitting against convex portions 26d of the hub member 26 when torsion is generated in the damper portion 3a. The convex portions 22a are sandwiched between the side plate 20 and the side plate 21, and are integrally fixed to the side plate 20 and the side plate 21 by the rivet 30 (see FIG. 3). The ring member 22 is connected to the side plates 20 and 21 and the center plate 13 by the bolt 31 at a portion that is displaced in the circumferential direction from the rivet 30 (see FIG. 2).

The seat member 23 is a constituent part of the damper portion 3a in the second assembly 3. The seat member 23 is accommodated by the window portions 20a, 21a, and 26c formed respectively on the side plates 20 and 21 and the hub member 26 (flange 26b), and the seat member 23 is disposed between the end faces in the circumferential direction of the window portions 20a, 21a, and 26c and the end of the coil spring 24. A resin can be used for the seat member 23 in order to reduce the wear on the coil spring 24.

The coil spring 24 is a constituent part of the damper portion 3a in the second assembly 3. The coil spring 24 is accommodated by the window portions 20a, 21a, and 26c formed respectively on the side plates 20 and 21 and the hub member 26 (flange 26b), and is in contact with the seat members 23 disposed on both ends of the coil spring 24. The coil spring 24 contracts when torsion (torsion between the side plates 20 and 21 and the hub member 26) is generated in the damper portion 3a. The coil spring 24 may be formed to have a straight shape, or may be formed into the straight shape and then bent while being assembled. Alternatively, an arc spring that is curved in the circumferential direction may be used so as to realize a large torsion.

The cushion member 25 is a member that absorbs a shock when the convex portions 26d of the hub member 26 hit against the convex portions 22a of the ring member 22 when torsion is generated in the damper portion 3a in the second assembly 3. The cushion member 25 is disposed inside the coil spring 24. The cushion member 25 is in a free state until it is sandwiched between a pair of seat members 23 when torsion is generated in the damper portion 3a, and is sandwiched between the pair of seat members 23 before the convex portions 26d of the hub member 26 hit against the convex portions 22a of the ring member 22.

The hub member 26 is a member that outputs a rotative power from the damper portion 3a and the hysteresis portion 3b in the second assembly 3 to the transmission, and is a constituent member of the damper portion 3a and the hysteresis portion 3b. The hub member 26 includes the flange 26b that extends radially outward from a predetermined location on the outer periphery of the hub portion 26a. An inner circumferential surface of the hub portion 26a is spline-engaged (engaged so that it cannot rotate but can move axially) with the input shaft 8 of the transmission. The outer periphery of the hub portion 26a rotatably supports the side plate 20 via the thrust member 27, and rotatably supports the side plate 21 via the thrust member 28. The flange 26b includes, in the damper portion 3a, a window portion 26c for accommodating the coil spring 24 and the seat member 23. The circumferential end face of the window portion 26c is in separatably contact with the seat member 23. The flange 26b is slidably sandwiched by the thrust members 27 and 28 at a surface in the axial direction of the hysteresis portion 3b that is radially inward relative to the damper portion 3a. The outer circumferential end of the flange 26b includes a plurality of convex portions 26d that protrude radially outward. The convex portions 26d are portions that control the torsion of the damper portion 3a at a prescribed angle, and they control the torsion of the damper portion 3a by hitting against the convex portions 22a of the ring member 22 when torsion is generated in the damper portion 3a.

The thrust member 27 is a ring-shaped member disposed between the side plate 20 and the hub member 26, and is a constituent part of the hysteresis portion 3b in the second assembly 3. The thrust member 27 is positioned between the side plate 20 and the flange 26b in the axial direction. The thrust member 27 engages with the side plate 20 so that it cannot rotate but can move axially, and is slidably pressed against the flange 26b. The thrust members 27 is also interposed between the side plate 20 and the hub portion 26a in the radial direction, and serves as a sliding bearing (a bush) for rotatably supporting the side plate 20 on the hub portion 26a.

The thrust member 28 is a ring-shaped member disposed between the side plate 21 and the hub member 26, and is a constituent part of the hysteresis portion 3b in the second assembly 3. The thrust member 28 is positioned between the disc spring 29 and the flange 26b in the axial direction. The thrust member 28 is biased toward the flange 26b by the disc spring 29, and is slidably pressed against the flange 26b. The thrust member 28 engages with the side plate 21 so that it cannot rotate but can move axially. The thrust member 28 is also interposed between the side plate 21 and the hub portion 26a in the radial direction, and serves as a sliding bearing (a bush) for rotatably supporting the side plate 21 on the hub portion 26a.

The disc spring 29 is a disc-shaped spring that is disposed between the thrust member 28 and the side plate 21, and biases the thrust member 28 toward the flange 26b. The disc spring 29 is a constituent part of the hysteresis portion 3b in the second assembly 3. The disc spring 29 engages at its inner circumferential end with the thrust member 28 so that it cannot rotate but can move axially. The disc spring 29 is supported at its outer circumferential end by the side plate 21, and biases the thrust member 28 toward the flange 26b at its inner circumferential portion.

The rivet 30 is a member for integrally fixing the side plates 20 and 21 and the ring member 22 to each other.

The bolt 31 is a second connecting member that connects the second end of the first assembly 2 (corresponding to the center plate 13) to the first end of the second assembly 3 (corresponding to the side plates 20 and 21 and the ring member 22). The bolt 31 can be rotated from the transmission side (left side in FIG. 2) using a tool.

According to the first embodiment, by dividing the torque fluctuation absorbing apparatus 1 into the first assembly 2 and the second assembly 3 and configuring the assemblies so that the second end of the first assembly 2 can be connected to the first end of the second assembly 3, a work hole through which the bolt 7 for connecting to the crank shaft 6 is inserted can be eliminated from the torque fluctuation absorbing apparatus 1, and thus the strength of the apparatus can be ensured.

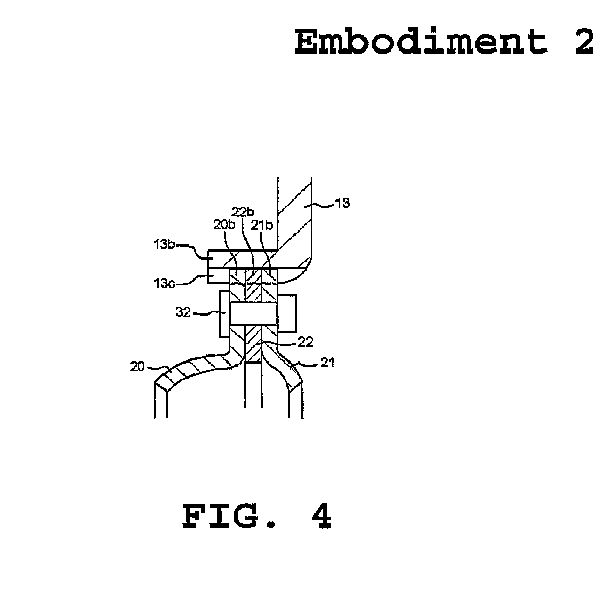

A second embodiment of the torque fluctuation absorbing apparatus disclosed here will be explained with reference to the drawings. FIG. 4 is an enlarged partial section view schematically illustrating a connection portion of a first assembly and a second assembly in the torque fluctuation absorbing apparatus according to a second embodiment disclosed here.

The second embodiment is a variation of the first embodiment. In the second embodiment, as the second connecting member for connecting the second end (corresponding to the center plate 13) of the first assembly (corresponding to 2 in FIG. 2) to the first end (corresponding to the side plates 20 and 21 and the ring member 22) of the second assembly (corresponding to 3 in FIG. 2), instead of using a bolt (31 in FIG. 2), a cylindrical portion 13b that protrudes toward the transmission side (left side in FIG. 4) is provided on the inner circumferential end of the center plate 13, an inner spline 13c is formed on the inner circumferential surface of the cylindrical portion 13b, and outer splines 20b, 21b, and 22b are respectively provided on the outer circumferential end surfaces of the side plates 20 and 21 and the ring member 22. The second end (corresponding to the center plate 13) of the first assembly (corresponding to 2 in FIG. 2) is connected to the first end (corresponding to the side plates 20 and 21 and the ring member 22) of the second assembly (corresponding to 3 in FIG. 2) by spline-engaging (engaging so that relative rotation is impossible, relative movement in the axial direction is impossible, and relative movement in the radial direction is impossible) the inner spline 13c with the outer splines 20b, 21b, and 22b. In accordance with the elimination of the bolt (31 in FIG. 2), the side plates 20 and 21 and the ring member 22 are integrally fixed to each other by a rivet 32 in addition to the rivet (corresponding to 30 in FIG. 3). Other structures of the second embodiment are identical to those of the first embodiment.

According to the second embodiment, effects similar to the first embodiment are attained.

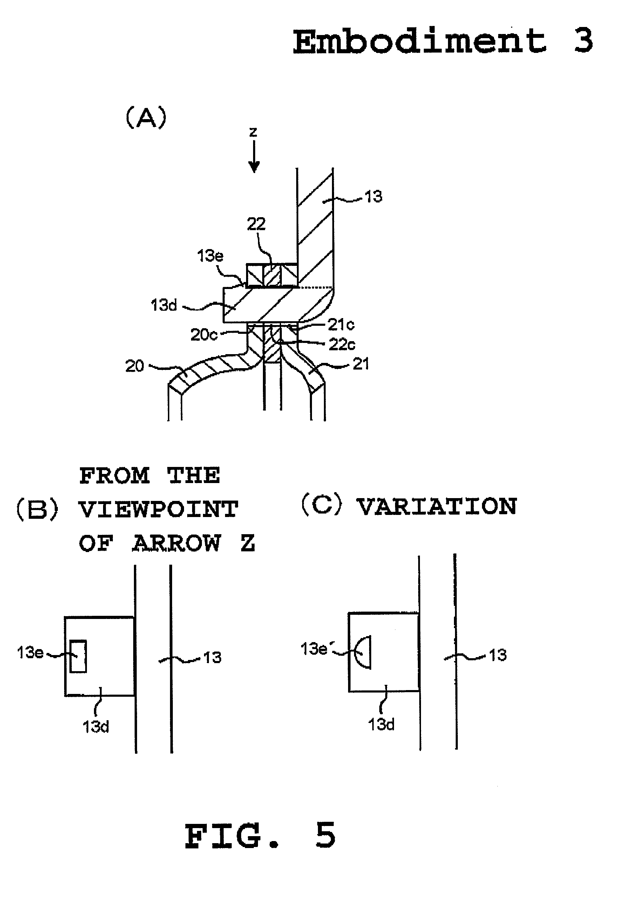

A third embodiment of the torque fluctuation absorbing apparatus disclosed here will be explained with reference to the drawings. FIG. 5 schematically illustrates the torque fluctuation absorbing apparatus according to a third embodiment disclosed here, where (A) is an enlarged partial section view schematically illustrating a connection portion of a first assembly and a second assembly, (B) is a partial plane view schematically illustrating a structure of a center plate of the first assembly from the viewpoint of arrow z, and (C) is a partial plane view schematically illustrating a structure of a variation of the center plate.

The third embodiment is a variation of the first embodiment. In the third embodiment, as the second connecting member for connecting the second end (corresponding to the center plate 13) of the first assembly (corresponding to 2 in FIG. 2) to the first end (corresponding to the side plates 20 and 21 and the ring member 22) of the second assembly (corresponding to 3 in FIG. 2), instead of using a bolt (31 in FIG. 2), a plurality of protruding portions 13d that protrude toward the transmission side (left side in FIG. 5) are provided on the inner circumferential end of the center plate 13, and holes 20c, 21c, and 22c are respectively provided to the side plates 20 and 21 and the ring member 22. The protruding portions 13d are inserted through the holes 20c, 21c, and 22c, and a claw portion 13e is provided on a radially outward surface of the distal end portion of the protruding portions 13d. Thereby, the side plates 20 and 21 and the ring member 22 are configured so that they do not fall out from the protruding portions 13d due to the claw portions 13e.

A surface on the engine side (right side in FIG. 5) of the side plate 21 abuts the main body of the center plate 13. A surface on the engine side (right side in FIG. 5) of the claw portion 13e is formed so as to hook onto the side plate 20. Thereby, the side plates 20 and 21 and the ring member 22 cannot move axially relative to the center plate 13. The surfaces on both sides in the circumferential direction of the protruding portion 13d abut the holes 20c, 21c, and 22c. Thereby, the side plates 20 and 21 and the ring member 22 cannot move in the circumferential direction relative to the center plate 13. A radially outward surface of the protruding portion 13d abuts the holes 20c, 21c, and 22c. Thereby, the side plates 20 and 21 and the ring member 22 cannot move radially relative to the center plate 13.

A surface on the transmission side (left side in FIG. 5) of the claw portion 13e is tapered in order to make the protruding portion 13d easily elastically deformable radially inward when the protruding portion 13d is inserted through the holes 20c, 21c, and 22c. The holes 20c, 21c, and 22c are set larger in the radial direction than the cross-section of the protruding portion 13d so that the protruding portion 13d (including the claw portion 13e) can pass therethrough when the protruding portion 13d is elastically deformed radially inward. A surface on the transmission side (left side in FIG. 5) of the claw portion 13e can be formed as, for example, a rectangular-shaped claw portion 13e (see FIG. 5(B)) or a semicircular-shaped claw portion 13e' (see FIG. 5(C)) when viewed from the radially outward side (viewpoint of the arrow z in FIG. 5). Other structures of the third embodiment are identical to those of the first embodiment.

In FIG. 5, the apparatus is designed on the assumption that the protruding portion 13d will elastically deform radially inward. However, the protruding portion can elastically deform radially outward, and the claw portion can be provided on a surface on the radially inward side of the distal end portion of the protruding portion.

According to the third embodiment, effects similar to the first embodiment are obtained, and during assembly at an engine plant, the second assembly can be mounted to the first assembly without any elaborate facilities such as assembling by a bolt or rivet.

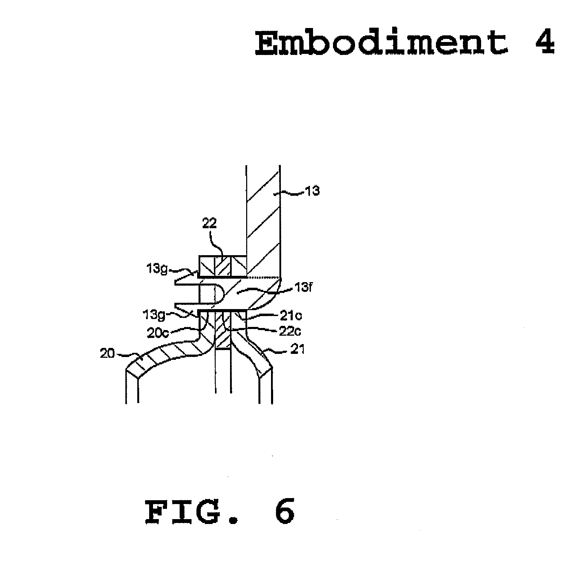

A fourth embodiment of the torque fluctuation absorbing apparatus disclosed here will be explained with reference to the drawings. FIG. 6 is an enlarged partial section view schematically illustrating a connection portion of a first assembly and a second assembly in the torque fluctuation absorbing apparatus according to a fourth embodiment disclosed here.

The fourth embodiment is a variation of the third embodiment. In the fourth embodiment, the protruding portion (13d in FIG. 5) provided to the inner circumferential end of the center plate 13 are configured as a forked protruding portion 13f including two distal end portions that can elastically deform in the radial direction. A claw portion 13g is provided to a surface (excluding the surface on the groove side between the distal end portions) in the radial direction of each distal end portion of the forked protruding portion 13f, and thereby the side plates 20 and 21 and the ring member 22 are configured so that they do not fall out from the forked protruding portion 13f due to the claw portions 13g.

A surface on the engine side (right side in FIG. 6) of the side plate 21 abuts the main body of the center plate 13. A surface on the engine side (right side in FIG. 6) of each claw portion 13g is formed so as to hook onto the side plate 20. Thereby, the side plates 20 and 21 and the ring member 22 cannot move axially relative to the center plate 13. The surfaces on both sides in the circumferential direction of the forked protruding portion 13f abut the holes 20c, 21c, and 22c. Thereby, the side plates 20 and 21 and the ring member 22 cannot move in the circumferential direction relative to the center plate 13. A surface(s) in the radial direction (one or both of radially outward and radially inward) of the forked protruding portion 13f abuts the holes 20c, 21c, and 22c. Thereby, the side plates 20 and 21 and the ring member 22 cannot move radially relative to the center plate 13.

A surface on the transmission side (left side in FIG. 6) of each claw portion 13g is tapered in order to make each distal end portion in the forked protruding portion 13f easily elastically deformable toward the groove side (groove between the distal end portions) when the forked protruding portion 13f is inserted through the holes 20c, 21c, and 22c. Other structures of the fourth embodiment are identical to those of the third embodiment.

According to the fourth embodiment, effects similar to the third embodiment are attained.

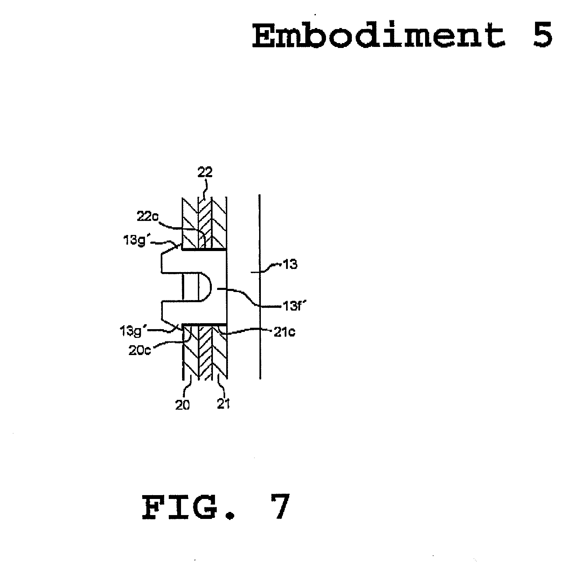

A fifth embodiment of the torque fluctuation absorbing apparatus disclosed here will be explained with reference to the drawings. FIG. 7 is an enlarged partial section view schematically illustrating a connection portion of a first assembly and a second assembly in the torque fluctuation absorbing apparatus according to a fifth embodiment disclosed here.

The fifth embodiment is a variation of the fourth embodiment. In the fifth embodiment, the two distal end portions of a forked protruding portion 13f' are elastically deformable in the circumferential direction rather than the radial direction, and a claw portion 13g' is provided to a surface (excluding the surface on the groove side between the distal end portions) in the circumferential direction of each distal end portion of the forked protruding portion 13f'. Thereby, the side plates 20 and 21 and the ring member 22 are configured so that they do not fall out from the forked protruding portion 13f' due to the claw portions 13g'.

A surface on the engine side (right side in FIG. 7) of the side plate 21 abuts the main body of the center plate 13. A surface on the engine side (right side in FIG. 7) of each claw portion 13g' is formed so as to hook onto the side plate 20. Thereby, the side plates 20 and 21 and the ring member 22 cannot move axially relative to the center plate 13. The surfaces on both sides in the circumferential direction of the forked protruding portion 13f' abut the holes 20c, 21c, and 22c. Thereby, the side plates 20 and 21 and the ring member 22 cannot move in the circumferential direction relative to the center plate 13. A surface(s) in the radial direction (one or both of radially outward and radially inward) of the forked protruding portion 13f' abuts the holes 20c, 21c, and 22c. Thereby, the side plates 20 and 21 and the ring member 22 cannot move radially relative to the center plate 13.

A surface on the transmission side (left side in FIG.7) of each claw portion 13g' is tapered in order to make each distal end portion in the forked protruding portion 13f' easily elastically deformable toward the groove side (groove between the distal end portions) when the forked protruding portion 13f is inserted through the holes 20c, 21c, and 22c. Other structures of the fifth embodiment are identical to those of the fourth embodiment.

According to the fifth embodiment, effects similar to the fourth embodiment are attained.

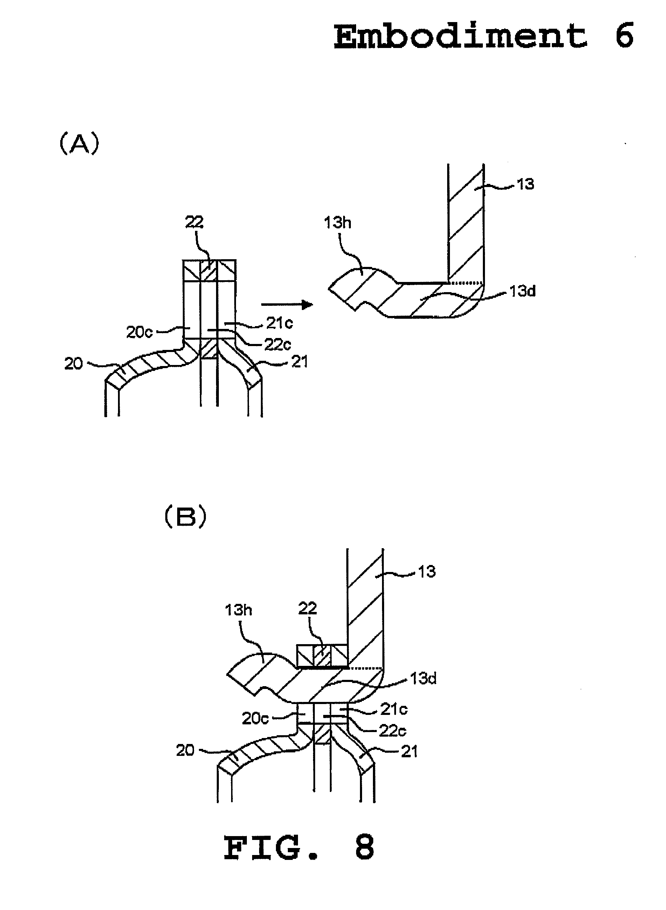

A sixth embodiment of the torque fluctuation absorbing apparatus disclosed here will be explained with reference to the drawings. FIG. 8 schematically illustrates a connection portion of a first assembly and a second assembly in the torque fluctuation absorbing apparatus according to a sixth embodiment disclosed here, where (A) is an enlarged partial section view before connection and (B) is an enlarged partial section view after connection.

The sixth embodiment is a variation of the third embodiment. In the sixth embodiment, the claw portion (13g in FIG. 5) is eliminated from the protruding portion 13d provided on the inner circumferential end of the center plate 13, and a hook portion 13h that is curved and protrudes radially outward is formed on the distal end of the protruding portion 13d by press molding. Thereby, the side plates 20 and 21 and the ring member 22 are configured so that they do not fall out from the protruding portion 13d due to the hook portion 13h.

A surface on the engine side (right side in FIG. 8) of the side plate 21 abuts the main body of the center plate 13. The hook portion 13h is formed so as to hook onto the side plate 20. Thereby, the side plates 20 and 21 and the ring member 22 cannot move axially relative to the center plate 13. The surfaces on both sides in the circumferential direction of the protruding portion 13d abut the holes 20c, 21c, and 22c. Thereby, the side plates 20 and 21 and the ring member 22 cannot move in the circumferential direction relative to the center plate 13. A radially outward surface of the protruding portion 13d abuts the holes 20c, 21c, and 22c. Thereby, the side plates 20 and 21 and the ring member 22 cannot move radially relative to the center plate 13.

The holes 20c, 21c, and 22c are set larger in the radial direction than the cross-section of the protruding portion 13d so that the protruding portion 13d (including the hook portion 13h) can pass therethrough when the protruding portion 13d is elastically deformed radially inward. Other structures of the sixth embodiment are identical to those of the third embodiment.

In FIG. 8, the apparatus is designed on the assumption that the protruding portion 13d will elastically deform radially inward. However, the protruding portion can elastically deform radially outward, and the hook portion can be configured to curve and protrude radially inward (the same applies to the seventh to ninth embodiments).

According to the sixth embodiment, effects similar to the third embodiment are attained.

A seventh embodiment of the torque fluctuation absorbing apparatus disclosed here will be explained with reference to the drawings. FIG, 9 schematically illustrates a connection portion of a first assembly and a second assembly in the torque fluctuation absorbing apparatus according to a seventh embodiment disclosed here, where (A) is an enlarged partial section view before connection, (B) is an enlarged partial section view after connection, and (C) is a partial plane view schematically illustrating a structure of a center plate of the first assembly from the viewpoint of arrow z.

The seventh embodiment is a variation of the sixth embodiment. In the seventh embodiment, the width in the circumferential direction of a portion of a hook portion 13h' formed on the distal end of the protruding portion 13d is made smaller than the width in the circumferential direction of a portion of the hook portion (13h in FIG. 8) of the sixth embodiment so as to make the hook portion 13h' easily elastically deformable. Other structures of the seventh embodiment are identical to those of the sixth embodiment.

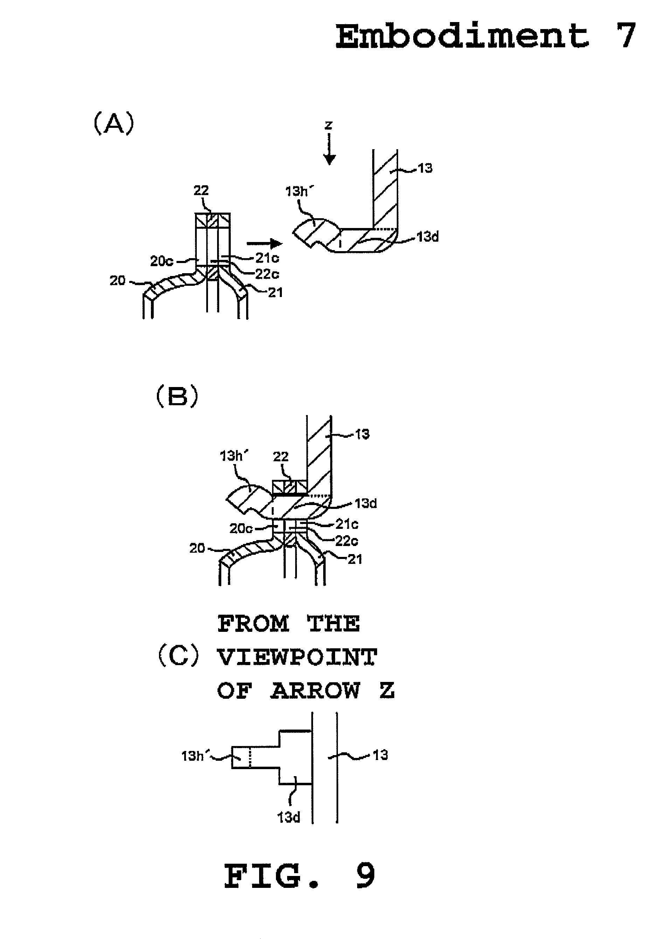

In FIG. 9, the portions on both sides in the circumferential direction of the hook portion 13h' are made into a cutout shape. However, only one side in the circumferential direction of the hook portion can be made into a cutout shape, or an intermediate portion of the hook portion can be made into a cutout shape.

According to the seventh embodiment, effects similar to the sixth embodiment are obtained, and by decreasing the width in the circumferential direction of a portion of the hook portion 13h', the connection operation of the side plates 20 and 21 and the ring member 22 to the center plate 13 becomes easier than that in the sixth embodiment.

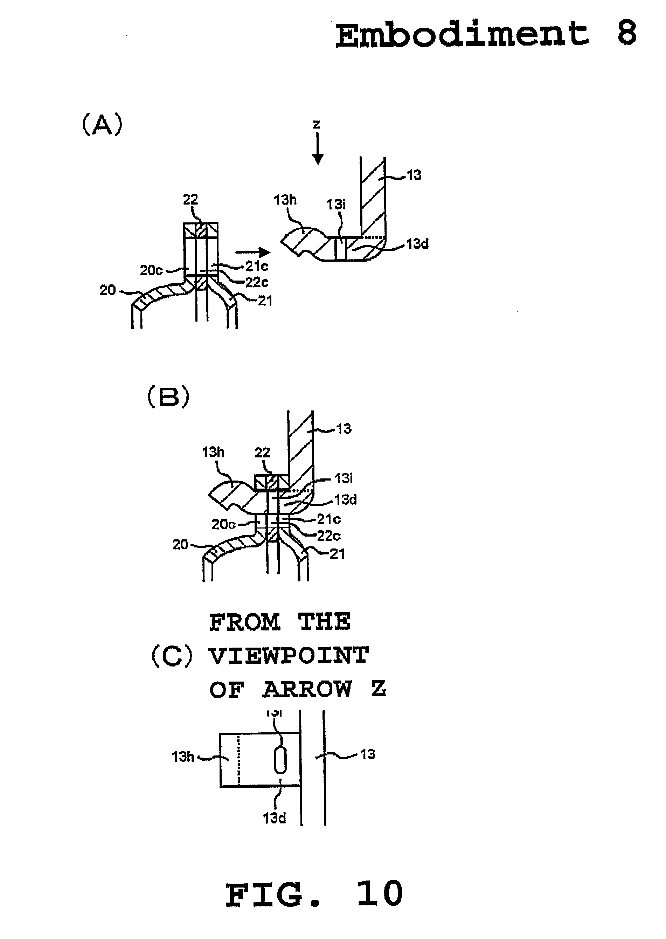

An eighth embodiment of the torque fluctuation absorbing apparatus disclosed here will be explained with reference to the drawings. FIG. 10 schematically illustrates a connection portion of a first assembly and a second assembly in the torque fluctuation absorbing apparatus according to an eighth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z.

The eighth embodiment is a variation of the sixth embodiment. In the eighth embodiment, a hole 13i (a cutout is also possible) that penetrates in the axial direction is formed in the protruding portion 13d at a portion disposed within the holes 20c, 21c, 22c. The hole 13i is not limited to one per protruding portion 13d, and a plurality of holes 13i can be formed in each protruding portion 13d. Other structures of the eighth embodiment are identical to those of the sixth embodiment.

According to the eighth embodiment, effects similar to the sixth embodiment are obtained, and by forming the hole 13i in the protruding portion 13d, the connection operation of the side plates 20 and 21 and the ring member 22 to the center plate 13 becomes easier than that in the sixth embodiment.

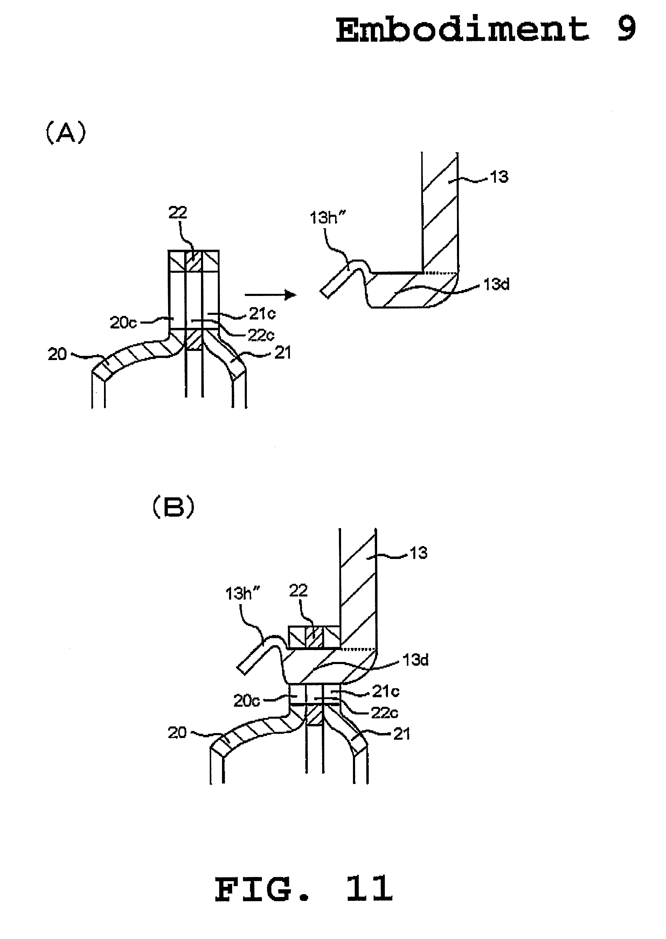

A ninth embodiment of the torque fluctuation absorbing apparatus disclosed here will be explained with reference to the drawings. FIG. 11 schematically illustrates a connection portion of a first assembly and a second assembly in the torque fluctuation absorbing apparatus according to a ninth embodiment disclosed here, where (A) is an enlarged partial section view before connection and (B) is an enlarged partial section view after connection.

The ninth embodiment is a variation of the sixth embodiment. In the ninth embodiment, the width (thickness) in the radial direction of a portion of a hook portion 13h" formed on the distal end of the protruding portion 13d is made smaller (thinner) than the width in the radial direction of a portion of the hook portion (13h in FIG. 8) of the sixth embodiment so as to make the hook portion 13h" easily elastically deformable. Other structures of the ninth embodiment are identical to those of the sixth embodiment.

In FIG. 11, a radially inward portion of the hook portion 13h" is made into a cutout shape. However, a radially outward portion can be made into a cutout shape if the hook portion hooks on at a radially inward position.

According to the ninth embodiment, effects similar to the sixth embodiment are obtained, and by decreasing the width in the radial direction of a portion of the hook portion 13h", the connection operation of the side plates 20 and 21 and the ring member 22 to the center plate 13 becomes easier than that in the sixth embodiment.

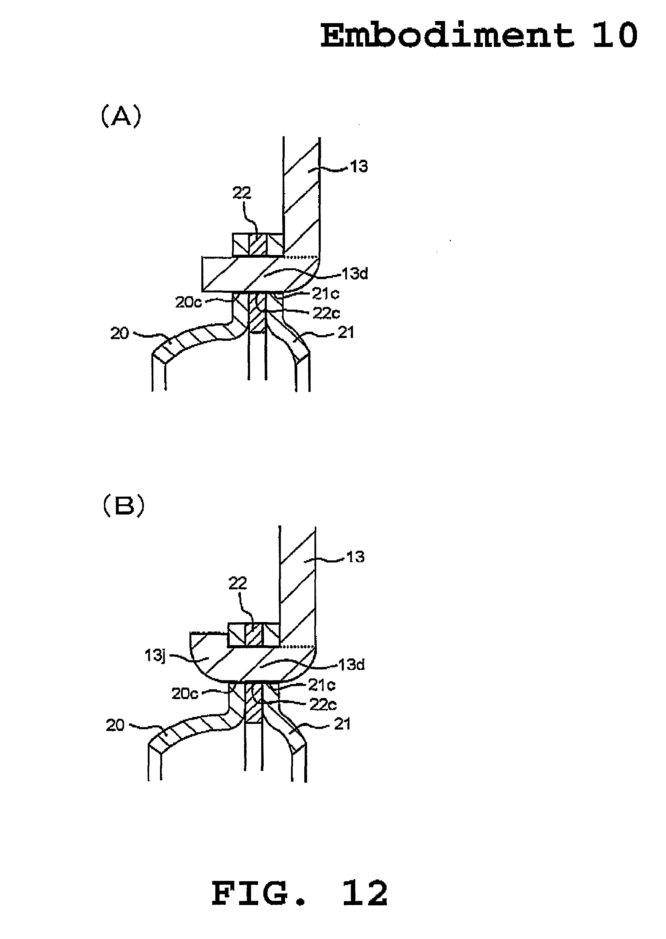

A tenth embodiment of the torque fluctuation absorbing apparatus disclosed here will be explained with reference to the drawings. FIG. 12 schematically illustrates a connection portion of a first assembly and a second assembly in the torque fluctuation absorbing apparatus according to a tenth embodiment disclosed here, where (A) is an enlarged partial section view before connection and (B) is an enlarged partial section view after connection.

The tenth embodiment is a variation of the third embodiment. In the tenth embodiment, the claw portion (13e in FIG. 5) is eliminated from the protruding portion 13d, and a bent portion 13j that is bent radially outward (radially inward is also possible) is formed on the distal end of the protruding portion 13d that is inserted through the holes 20c, 21c, and 22c. Thereby, the side plates 20 and 21 and the ring member 22 are configured so that they do not fall out from the protruding portion 13d due to the bent portion 13j.

A surface on the engine side (right side in FIG. 12) of the side plate 21 abuts the main body of the center plate 13. A surface on the engine side (right side in FIG. 12) of the bent portion 13j is formed so as to abut the side plate 20. Thereby, the side plates 20 and 21 and the ring member 22 cannot move axially relative to the center plate 13. The surfaces on both sides in the circumferential direction of the protruding portion 13d abut the holes 20c, 21c, and 22c. Thereby, the side plates 20 and 21 and the ring member 22 cannot move in the circumferential direction relative to the center plate 13. A surface(s) in the radial direction (one or both of radially outward and radially inward) of the protruding portion 13d abut (s) the holes 20c, 21c, and 22c. Thereby, the side plates 20 and 21 and the ring member 22 cannot move radially relative to the center plate 13. Other structures of the tenth embodiment are identical to those of the third embodiment.

A caulking portion can be used instead of the bent portion 13j. The bent portion 13j can be bent in the circumferential direction instead of the radial direction.

According to the tenth embodiment, effects similar to the third embodiment are obtained.

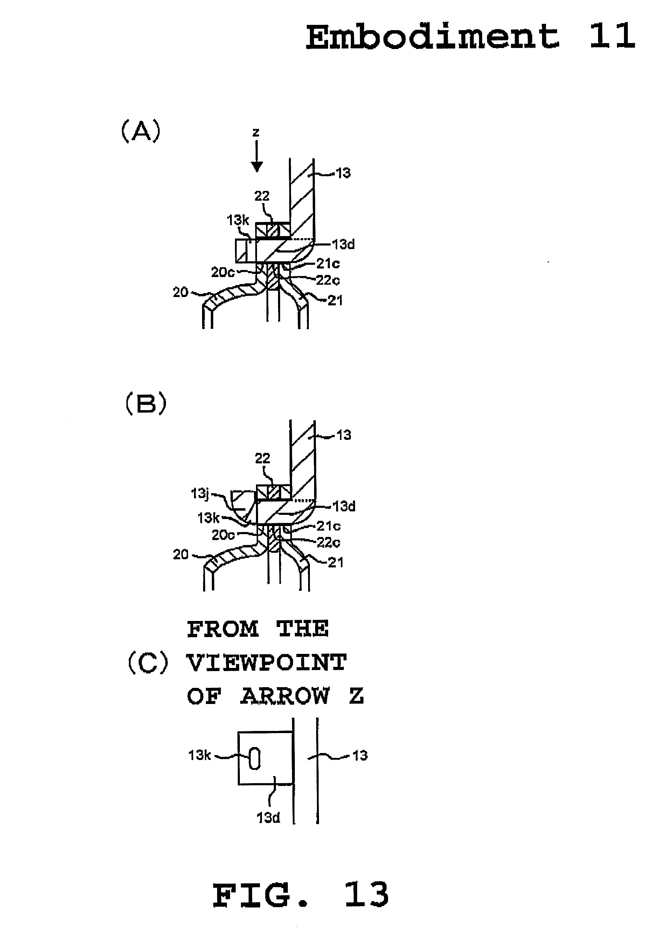

An eleventh embodiment of the torque fluctuation absorbing apparatus disclosed here will be explained with reference to the drawings. FIG. 13 schematically illustrates a connection portion of a first assembly and a second assembly in the torque fluctuation absorbing apparatus according to an eleventh embodiment disclosed here, where (A) is an enlarged partial section view before connection, (B) is an enlarged partial section view after connection, and (C) is a partial plane view schematically illustrating a structure of a center plate of the first assembly from the viewpoint of arrow z.

The eleventh embodiment is a variation of the tenth embodiment. In the eleventh embodiment, a hole 13k (a cutout is also possible) that penetrates in the radial direction is formed at the portion where the bent portion 13j is to be formed in the protruding portion 13d so as to make the bent portion 13j easier to form. The hole 13k is not limited to one per protruding portion 13d, and a plurality of holes 13k can be formed in each protruding portion 13d. Other structures of the eleventh embodiment are identical to those of the tenth embodiment.

According to the eleventh embodiment, effects similar to the tenth embodiment are obtained, and by forming the hole 13k in the protruding portion 13d, the connection operation of the side plates 20 and 21 and the ring member 22 to the center plate 13 becomes easier than that in the tenth embodiment.

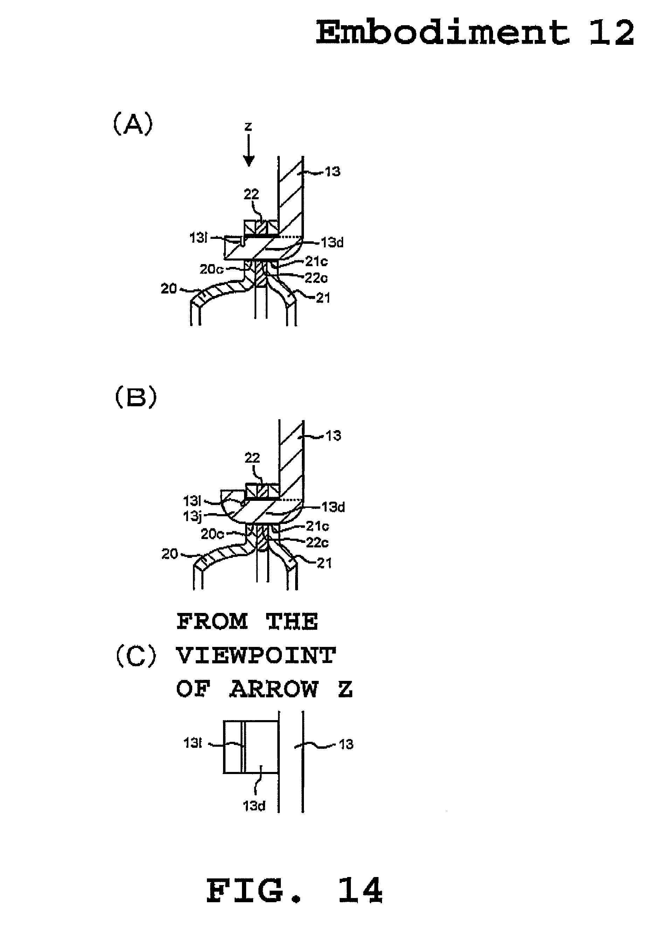

A twelfth embodiment of the torque fluctuation absorbing apparatus disclosed here will be explained with reference to the drawings. FIG. 14 schematically illustrates a connection portion of a first assembly and a second assembly in the torque fluctuation absorbing apparatus according to a twelfth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z.

The twelfth embodiment is a variation of the tenth embodiment. In the twelfth embodiment, a groove 131 along the circumferential direction is formed at the portion where the bent portion 13 j is to be formed in the protruding portion 13d so as to make the bent portion 13j easier to form. The groove 131 does not have to be formed only on a radially outward surface of the protruding portion 13d as in FIG. 14, but can also be formed on a radially inward surface or on a surface on one or both sides in the circumferential direction. Other structures of the twelfth embodiment are identical to those of the tenth embodiment.

According to the twelfth embodiment, effects similar to the tenth embodiment are obtained, and by forming the groove 131 in the protruding portion 13d, the connection operation of the side plates 20 and 21 and the ring member 22 to the center plate 13 becomes easier than that in the tenth embodiment.

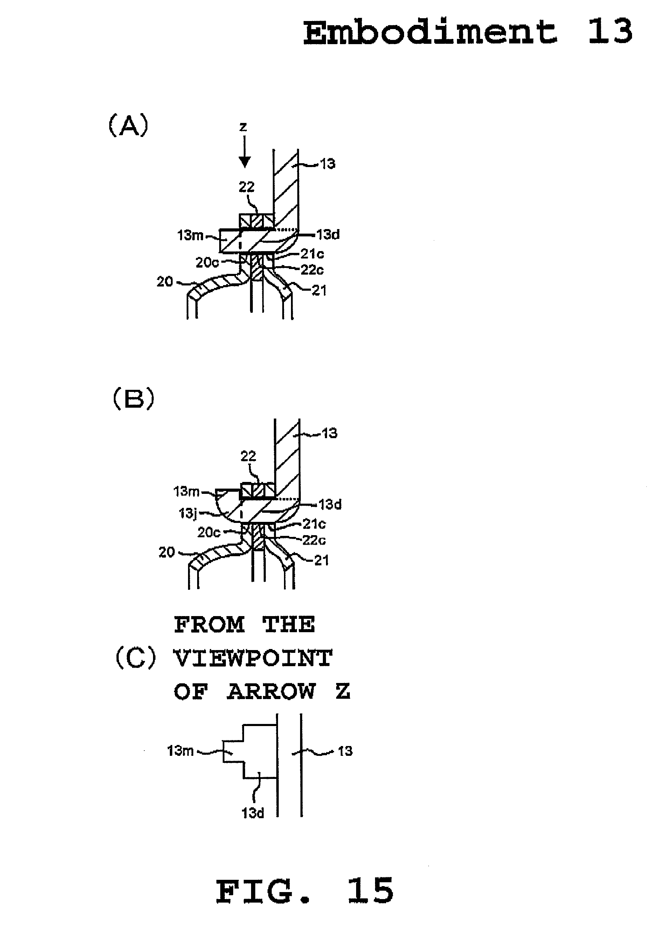

A thirteenth embodiment of the torque fluctuation absorbing apparatus disclosed here will be explained with reference to the drawings. FIG. 15 schematically illustrates a connection portion of a first assembly and a second assembly in the torque fluctuation absorbing apparatus according to a thirteenth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z.

The thirteenth embodiment is a variation of the tenth embodiment. In the thirteenth embodiment, the width in the circumferential direction of the portion where the bent portion 13j is to be formed in the protruding portion 13d is made into a convex portion 13m whose width is smaller than the width in the circumferential direction of the bent portion (13j in FIG. 12) in the tenth embodiment (a width identical to that in the circumferential direction of the protruding portion 13d in FIG. 12) so as to make the bent portion 13j easier to form. Other structures of the thirteenth embodiment are identical to those of the tenth embodiment.

In FIG. 15, the portions on both sides in the circumferential direction of the convex portion 13m are made into a cutout shape. However, only one side in the circumferential direction of the convex portion can be made into a cutout shape, or an intermediate portion of the convex portion can be made into a cutout shape.

According to the thirteenth embodiment, effects similar to the tenth embodiment are obtained, and by reducing the width in the circumferential direction of a portion of the convex portion 13m, the connection operation of the side plates 20 and 21 and the ring member 22 to the center plate 13 becomes easier than that in the tenth embodiment.

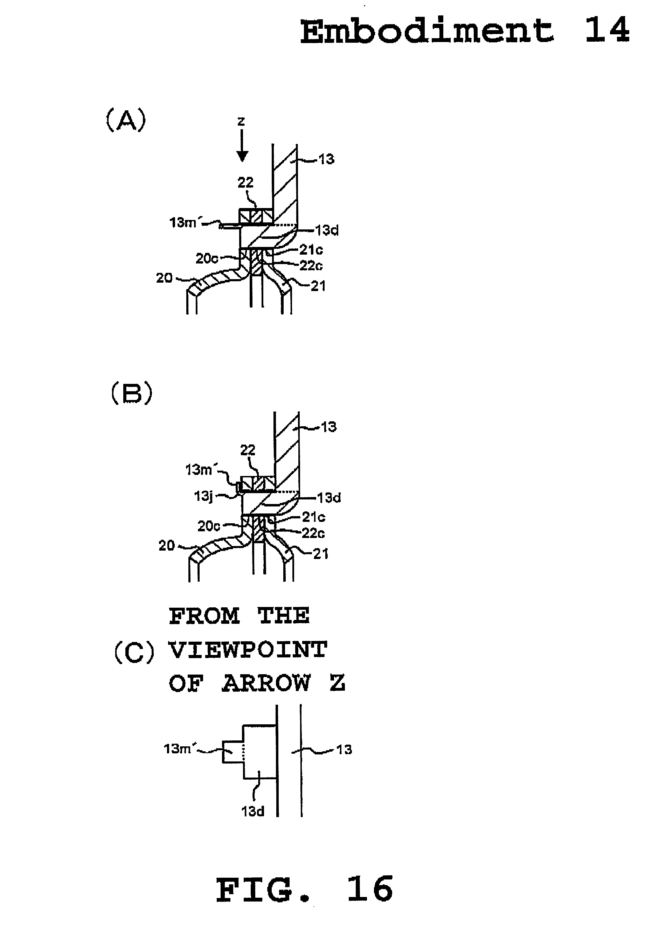

A fourteenth embodiment of the torque fluctuation absorbing apparatus disclosed here will be explained with reference to the drawings. FIG. 16 schematically illustrates a connection portion of a first assembly and a second assembly in the torque fluctuation absorbing apparatus according to a fourteenth embodiment disclosed here, where (A) is an enlarged partial section view before connection, (B) is an enlarged partial section view after connection, and (C) is a partial plane view schematically illustrating a structure of a center plate of the first assembly from the viewpoint of arrow z.

The fourteenth embodiment is a variation of the thirteenth embodiment. In the fourteenth embodiment, the width (thickness) in the radial direction of the portion where the bent portion 13j is to be formed in the protruding portion 13d is made into a convex portion 13m' whose width is smaller (thinner) than the width in the radial direction of the bent portion (13j in FIG. 12) in the tenth embodiment (a width identical to that in the radial direction of the protruding portion 13d in FIG. 12) so as to make the bent portion 13j easier to form. Other structures of the fourteenth embodiment are identical to those of the thirteenth embodiment.

In FIG. 16, a radially inward portion of the convex portion 13m' is made into a cutout shape. However, a radially outward portion can be made into a cutout shape if the bent portion hooks on at a radially inward position. Further, in FIG. 16, the width in the circumferential direction of the convex portion 13m' is made smaller than the width in the circumferential direction of the protruding portion 13d. However, the width in the circumferential direction of the convex portion 13m' can be made identical to the width in the circumferential direction of the protruding portion 13d.

According to the fourteenth embodiment, effects similar to the thirteenth embodiment are obtained, and by reducing the width in the radial direction of a portion of the convex portion 13m', the connection operation of the side plates 20 and 21 and the ring member 22 to the center plate 13 becomes easier than that in the thirteenth embodiment.

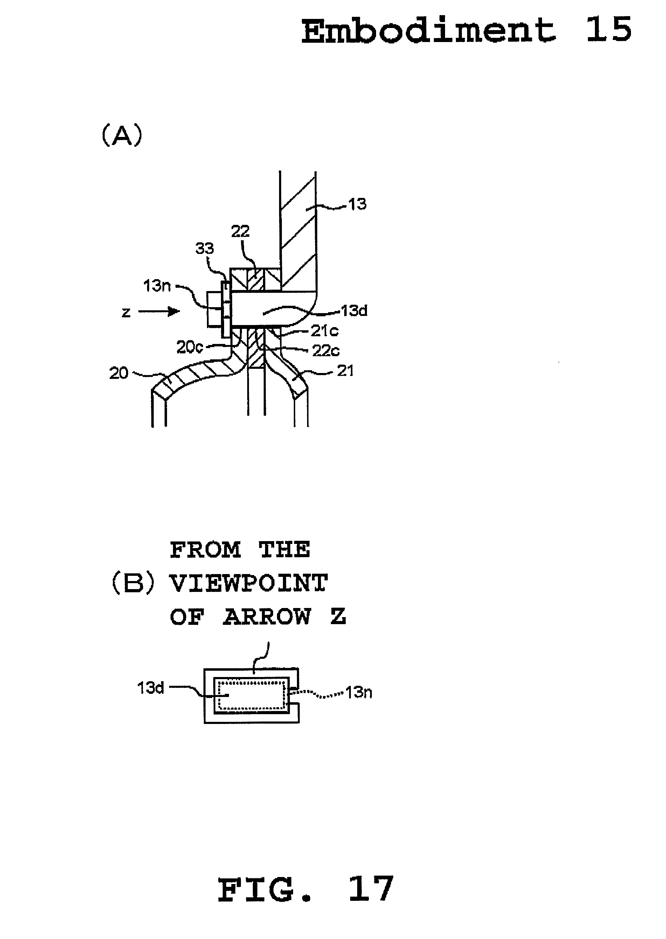

A fifteenth embodiment of the torque fluctuation absorbing apparatus disclosed here will be explained with reference to the drawings. FIG. 17 schematically illustrates a connection portion of a first assembly and a second assembly in the torque fluctuation absorbing apparatus according to a fifteenth embodiment disclosed here, where (A) is an enlarged partial section view, and (B) is a partial plane view schematically illustrating a structure when a center plate of the first assembly and a c-ring are combined from the viewpoint of arrow z.

The fifteenth embodiment is a variation of the third embodiment. In the fifteenth embodiment, the claw portion (13e in FIG. 5) is eliminated from the protruding portion 13d, a groove 13n is formed on the periphery (surfaces in the radial direction and the circumferential direction) of the distal end portion of the protruding portion 13d that is inserted through the holes 20c, 21c, and 22c, and a C-ring 33 (other stoppers such as a snap ring, a temporary stop rivet, or the like are possible) is fitted onto the groove 13n. Thereby, the side plates 20 and 21 and the ring member 22 are configured so that they do not fall out from the protruding portion 13d due to the C-ring 33.

A surface on the engine side (right side in FIG. 17) of the side plate 21 abuts the main body of the center plate 13. A surface on the engine side (right side in FIG. 17) of the C-ring 33 abuts the side plate 20. Thereby, the side plates 20 and 21 and the ring member 22 cannot move axially relative to the center plate 13. The surfaces on both sides in the circumferential direction of the protruding portion 13d abut the holes 20c, 21c, and 22c. Thereby, the side plates 20 and 21 and the ring member 22 cannot move in the circumferential direction relative to the center plate 13. A surface (s) in the radial direction (one or both of radially outward and radially inward) of the protruding portion 13d abut(s) the holes 20c, 21c, and 22c. Thereby, the side plates 20 and 21 and the ring member 22 cannot move radially relative to the center plate 13. Other structures of the fifteenth embodiment are identical to those of the third embodiment.

According to the fifteenth embodiment, effects similar to the third embodiment are attained.

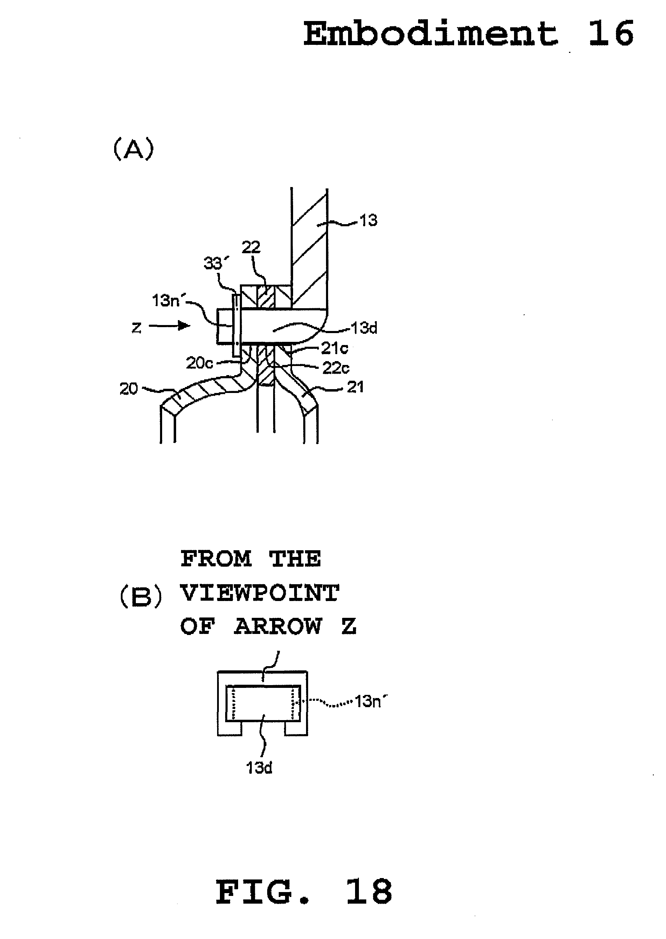

A sixteenth embodiment of the torque fluctuation absorbing apparatus disclosed here will be explained with reference to the drawings. FIG. 18 schematically illustrates a connection portion of a first assembly and a second assembly in the torque fluctuation absorbing apparatus according to a sixteenth embodiment disclosed here, where (A) is an enlarged partial section view, and (B) is a partial plane view schematically illustrating a structure when a center plate of the first assembly and a C-ring are combined from the viewpoint of arrow z.

The sixteenth embodiment is a variation of the fifteenth embodiment. In the sixteenth embodiment, a groove I3n' formed on the distal end portion of the protruding portion 13d is formed on the surfaces on both sides in the circumferential direction (both sides in the radial direction is also possible), and a C-ring 33' (other stoppers such as a snap ring, a temporary stop rivet, or the like are possible) is fitted onto the groove 13n'. Thereby, the side plates 20 and 21 and the ring member 22 are configured so that they do not fall out from the protruding portion 13d due to the C-ring 33'. Other structures of the sixteenth embodiment are identical to those of the fifteenth embodiment.

According to the sixteenth embodiment, effects similar to the fifteenth embodiment are attained.

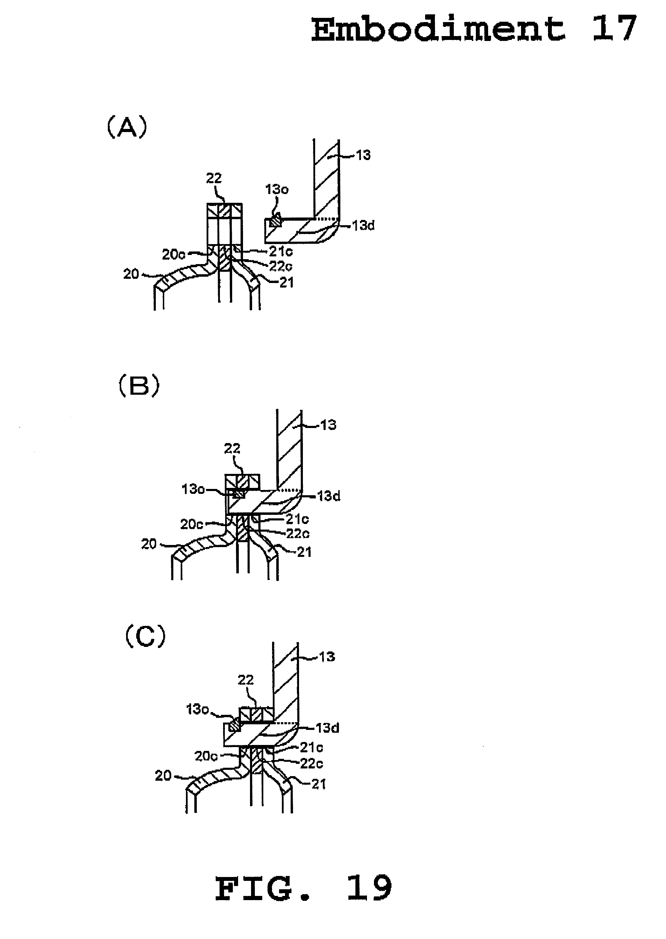

A seventeenth embodiment of the torque fluctuation absorbing apparatus disclosed here will be explained with reference to the drawings. FIG. 19 schematically illustrates a connection portion of a first assembly and a second assembly in the torque fluctuation absorbing apparatus according to a seventeenth embodiment disclosed here, where (A) is an enlarged partial section view before connection, (B) is an enlarged partial section view during connection, and (C) is an enlarged partial section view after connection.

The seventeenth embodiment is a variation of the third embodiment. In the seventeenth embodiment, the claw portion (13e in FIG. 5) is eliminated from the protruding portion 13d, an elastic body 13o is retained on a groove formed on a radially outward surface (a radially inward surface or the surfaces on both sides in the circumferential direction is also possible) of the protruding portion 13d. Thereby, the side plates 20 and 21 and the ring member 22 are configured so that they do not fall out from the protruding portion 13d due to the elastic body 13o. The elastic body 13o includes a portion that protrudes from a radially outward surface of the protruding portion 13d, and this protruding portion hooks onto the side plate 20. The elastic body 13o elastically deforms when the protruding portion 13d is inserted through the holes 20c, 21c, and 22c (see FIG. 19 (B)).

A surface on the engine side (right side in FIG. 19) of the side plate 21 abuts the main body of the center plate 13. The protruding portion of the elastic body 13o abuts the side plate 20. Thereby, the side plates 20 and 21 and the ring member 22 cannot move axially relative to the center plate 13. The surfaces on both sides in the circumferential direction of the protruding portion 13d abut the holes 20c, 21c, and 22c. Thereby, the side plates 20 and 21 and the ring member 22 cannot move in the circumferential direction relative to the center plate 13. A surface(s) in the radial direction (one or both of radially outward and radially inward) of the protruding portion 13d abut(s) the holes 20c, 21c, and 22c. Thereby, the side plates 20 and 21 and the ring member 22 cannot move radially relative to the center plate 13. Other structures of the seventeenth embodiment are identical to those of the third embodiment.

According to the seventeenth embodiment, effects similar to the third embodiment are attained.

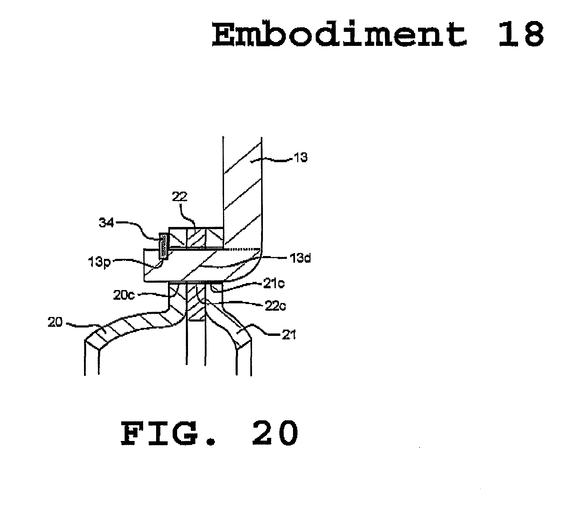

An eighteenth embodiment of the torque fluctuation absorbing apparatus disclosed here will be explained with reference to the drawings. FIG. 20 is an enlarged partial section view of an engaged portion of a ring member and a center plate in the torque fluctuation absorbing apparatus according to an eighteenth embodiment disclosed here.

The eighteenth embodiment is a variation of the third embodiment. In the eighteenth embodiment, the claw portion (13e in FIG. 5) is eliminated from the protruding portion 13d, a groove 13p is provided on a radially outward surface of the protruding portion 13d, and a ring member 34 is fitted onto the groove 13p.

A surface on the engine side (right side in FIG. 20) of the side plate 21 abuts the main body of the center plate 13. The ring member 34 abuts the side plate 20. Thereby, the side plates 20 and 21 and the ring member 22 cannot move axially relative to the center plate 13. The surfaces on both sides in the circumferential direction of the protruding portion 13d abut the holes 20c, 21c, and 22c. Thereby, the side plates 20 and 21 and the ring member 22 cannot move in the circumferential direction relative to the center plate 13. A surface (s) in the radial direction (one or both of radially outward and radially inward) of the protruding portion 13d abut (s) the holes 20c, 21c, and 22c. Thereby, the side plates 20 and 21 and the ring member 22 cannot move radially relative to the center plate 13. Other structures of the eighteenth embodiment are identical to those of the third embodiment.

According to the eighteenth embodiment, effects similar to the third embodiment are attained.

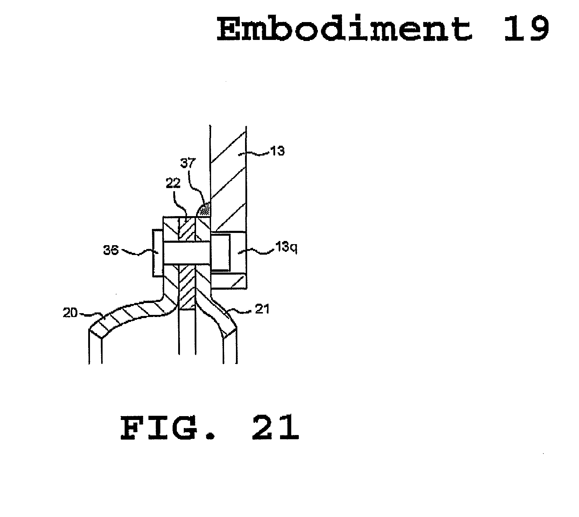

A nineteenth embodiment of the torque fluctuation absorbing apparatus disclosed here will be explained with reference to the drawings. FIG. 21 is an enlarged partial section view schematically illustrating a connection portion of a first assembly and a second assembly in the torque fluctuation absorbing apparatus according to a nineteenth embodiment disclosed here.

The nineteenth embodiment is a variation of the first embodiment. In the nineteenth embodiment, as the second connecting member for connecting the second end (corresponding to the center plate 13) of the first assembly (corresponding to 2 in FIG. 2) to the first end (corresponding to the side plates 20 and 21 and the ring member 22) of the second assembly (corresponding to 3 in FIG. 2), instead of using a bolt (31 in FIG. 2), the side plates 20 and 21 and the ring member 22 are integrally fixed with a rivet 36, and a hole 13q (a cutout is also possible) is formed on the center plate 13 so that the center plate 13 does not conflict with the rivet 36. The side plate 21 is then abutted to the center plate 13 and a weld portion 37 is formed to weld the outer circumferential end of the side plate 21 to the center plate 13. Thereby, the side plates 20 and 21 and the ring member 22 are connected to the center plate 13. The hole 13q can also be used to position a jaw portion (head portion) of the rivet 36. Other structures of the nineteenth embodiment are identical to those of the first embodiment.

According to the nineteenth embodiment, effects similar to the first embodiment are attained.

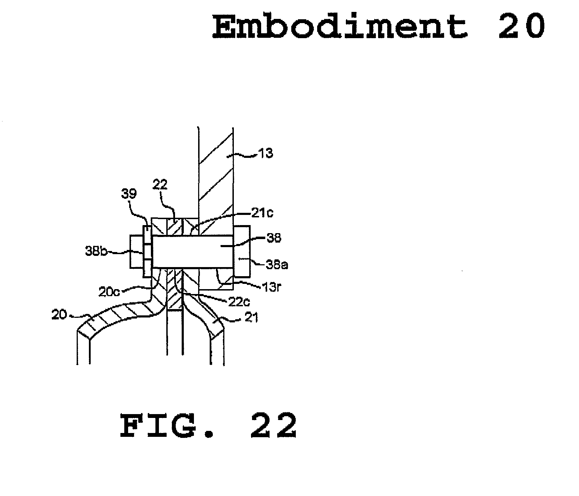

A twentieth embodiment of the torque fluctuation absorbing apparatus disclosed here will be explained with reference to the drawings. FIG. 22 is an enlarged partial section view schematically illustrating a connection portion of a first assembly and a second assembly in the torque fluctuation absorbing apparatus according to a twentieth embodiment disclosed here.

The twentieth embodiment is a variation of the first embodiment. In the twentieth embodiment, as the second connecting member for connecting the second end (corresponding to the center plate 13) of the first assembly (corresponding to 2 in FIG. 2) to the first end (corresponding to the side plates 20 and 21 and the ring member 22) of the second assembly (corresponding to 3 in FIG. 2), instead of using a bolt (31 in FIG. 2), a pin member 38 and a C-ring 39 (other stoppers such as a snap ring, a temporary stop rivet, or the like are possible) are used to connect the side plates 20 and 21 and the ring member 22 to the center plate 13. Holes 20c, 21c, 22c, and 13r through which a pin portion of the pin member 38 is inserted are formed respectively in the side plates 20 and 21, the ring member 22, and the center plate 13, and the pin portion of the pin member 38 is inserted into the holes 20c, 21c, 22c, and 13r so that a jaw portion 38a of the pin member 38 is on the engine side (right side in FIG. 22). A groove 38b is formed on a peripheral surface of the distal end of the pin portion of the pin member 38, and the C-ring 39 is fitted onto the groove 38b. Thereby, the side plates 20 and 21 and the ring member 22 are connected to the center plate 13. The jaw portion 38a of the pin member 38 can be pre-welded and fixed to the center plate 13. By abutting the jaw portion 38a of the pin member 38 to the center plate 13 and abutting the C-ring 39 to the side plate 20, the side plates 20 and 21 and the ring member 22 cannot move axially relative to the center plate 13. Other structures of the twentieth embodiment are identical to those of the first embodiment.

According to the twentieth embodiment, effects similar to the first embodiment are attained.

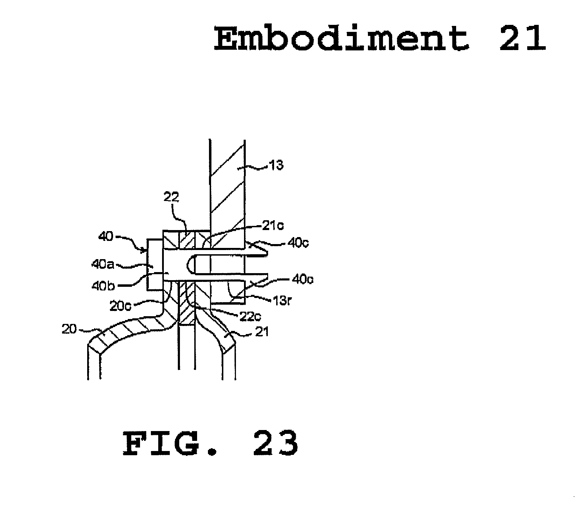

A twenty first embodiment of the torque fluctuation absorbing apparatus disclosed here will be explained with reference to the drawings. FIG. 23 is an enlarged partial section view schematically illustrating a connection portion of a first assembly and a second assembly in the torque fluctuation absorbing apparatus according to a twenty first embodiment disclosed here.

The twenty first embodiment is a variation of the first embodiment. In the twenty first embodiment, as the second connecting member for connecting the second end (corresponding to the center plate 13) of the first assembly to the first end (corresponding to the side plates 20 and 21 and the ring member 22) of the second assembly 3, instead of using a bolt (31 in FIG. 2), a pin member 40 is used to connect the side plates 20 and 21 and the ring member 22 to the center plate 13. Holes 20c, 21c, 22c, and 13r through which a forked pin portion 40b (a pin portion having a structure in which its distal end is split into two parts) of the pin member 38 is inserted are formed respectively in the side plates 20 and 21, the ring member 22, and the center plate 13, and the forked pin portion 40b of the pin member 40 is inserted into the holes 20c, 21c, 22c, and 13r so that a jaw portion 40a of the pin member 40 is on the transmission side (left side in FIG. 23). A claw portion 40c is provided on an outer circumferential surface (excluding the groove between the two distal ends) of each distal end of the forked pin portion 40b of the pin member 40. The side plates 20 and 21 and the ring member 22 are connected to the center plate 13 by hooking the claw portions 40c onto the center plate 13. By abutting the jaw portion 40a of the pin member 40 to the side plate 20 and hooking the claw portions 40c onto the center plate 13, the side plates 20 and 21 and the ring member 22 cannot move axially relative to the center plate 13. Other structures of the twenty first embodiment are identical to those of the first embodiment.

According to the twenty first embodiment, effects similar to the first embodiment are attained.

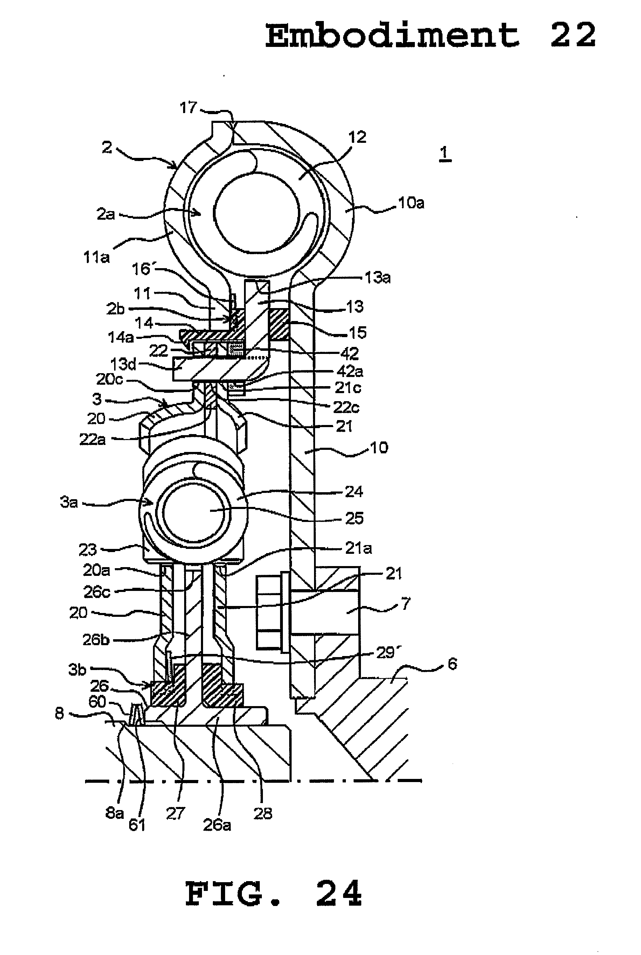

A twenty second embodiment of the torque fluctuation absorbing apparatus disclosed here will be explained with reference to the drawings. FIG. 24 is a section view schematically illustrating a structure of the torque fluctuation absorbing apparatus according to a twenty second embodiment disclosed here.

The twenty second embodiment is a variation of the third embodiment. In the twenty second embodiment, the claw portion (13e in FIG. 5) is eliminated from the protruding portion 13d provided on the inner circumferential end of the center plate 13, and disc springs 60 and 61 (other elastic members such as a coil spring, rubber, elastomer, and the like are possible) are disposed between a stepped portion 8a provided on the outer circumferential surface of the input shaft 8 and an end surface on the transmission side (left side in FIG. 24) of the hub portion 26a of the hub member 26 to elastically control the movement toward the transmission side (left side in FIG. 24) of the hub member 26. By disposing a spacer 42 between the center plate 13 and the side plate 21, axial movement of the second assembly 3 is controlled. The protruding portion 13d engages with the holes 20c, 21c, and 22c of the side plates 20 and 21 and the ring member 22 so that it cannot rotate but can move axially. The spacer 42 includes a hole 42a that engages with the protruding portion 13d so that it cannot rotate but can move axially. During assembly, spacers of multiple types that have different thicknesses in the axial direction can be collected, and the spacer that controls the axial movement of the second assembly 3 the most can be selected as the spacer 42. The side plate 21 abuts a main body of the center plate 13 via the spacer 42, and thereby the axial movement toward the engine side (right side in FIG. 24) of the second assembly 3 is controlled. The disc spring 60 is supported at its inner circumferential end by the stepped portion 8a, and its outer circumferential end contacts the outer circumferential end of the disc spring 61. The outer circumferential end of the disc spring 61 contacts the outer circumferential end of the disc spring 60, and the disc spring 61 contacts the hub portion 26a at a portion near its inner circumferential end. The disc springs 60 and 61 bias the hub portion 26a toward the engine side (right side in FIG. 24).

A disc spring 16' in the hysteresis portion 2b is disposed between the side plate 11 and the thrust member 14 instead of between the side plate 10 and the thrust member 15. The disc spring 16' is set so that it is supported at its outer circumferential end by the side plate 11 and its inner circumferential end biases the thrust member 14 toward the center plate 13. The thrust member 14 is disposed between the disc spring 16' and the center plate 13, and engages with the side plate 11 so that it cannot rotate but can move axially. The thrust member 14 includes a retaining portion 14a that extends toward the transmission side (left side in FIG. 24) on the radially inward side of the side plate 11 and protrudes more radially inward on the transmission side (left side in FIG. 24) than the side plate 20 of the second assembly 3. The retaining portion 14a is a portion that prevents the second assembly 3 from moving toward the transmission side (left side in FIG. 24) and falling out from the protruding portion 13d. The retaining portion 14a can be continuous or discontinuous in the circumferential direction. The thrust member 15 is sandwiched between the side plate 10 and the center plate 13, and engages with the side plate 10 so that it cannot rotate but can move axially.

A disc spring 29' in the hysteresis portion 3b is disposed between the side plate 20 and the thrust member 27 instead of between the side plate 21 and the thrust member 28. The disc spring 29' is set so that it is supported at its outer circumferential end by the side plate 20 and its inner circumferential end biases the thrust member 27 toward the flange 26b. The thrust member 27 is disposed between the disc spring 29' and the flange 26b, and engages with the side plate 20 so that it cannot rotate but can move axially. The thrust member 28 is sandwiched between the side plate 21 and the flange 26b, and engages with the side plate 21 so that it cannot rotate but can move axially.

Other structures of the twenty second embodiment are identical to those of the third embodiment.

According to the twenty second embodiment, effects similar to the third embodiment are attained.

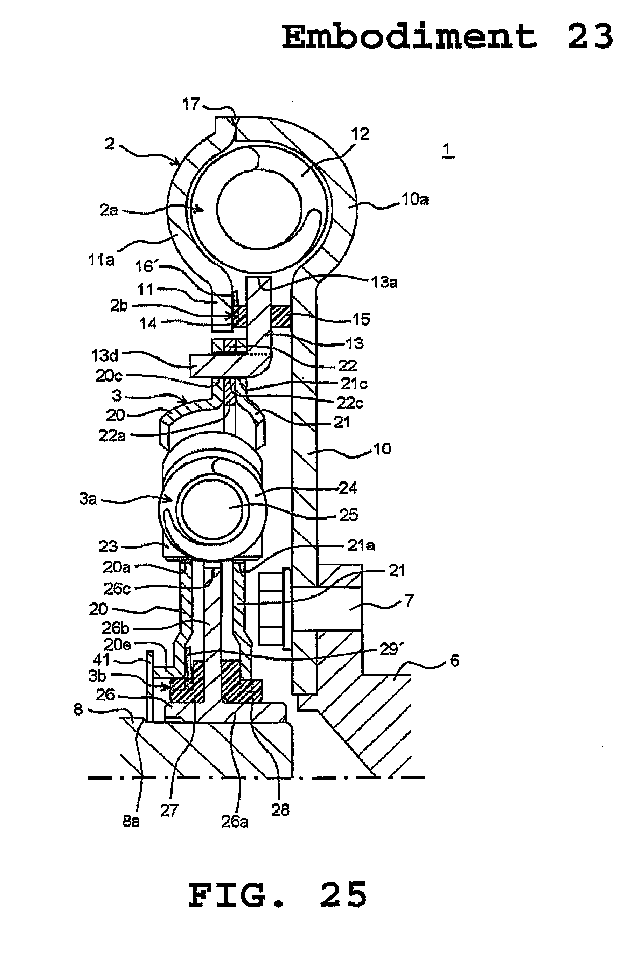

A twenty third embodiment of the torque fluctuation absorbing apparatus disclosed here will be explained with reference to the drawings. FIG. 25 is a section view schematically illustrating a structure of the torque fluctuation absorbing apparatus according to a twenty third embodiment disclosed here.

The twenty third embodiment is a variation of the third embodiment. In the twenty third embodiment, the claw portion (13e in FIG. 5) is eliminated from the protruding portion 13d provided on the inner circumferential end of the center plate 13, and a ring-shaped plate member 41 whose movement toward the transmission side (left side in FIG. 25) is controlled by the stepped portion 8a provided on an outer circumferential surface of the input shaft 8 is fitted (can be fitted to make relative rotation impossible by spline-engagement) onto the input shaft 8. A plurality of protruding portions 20e are provided so that a portion (or all) of the inner circumferential end of the side plate 20 extends to abut the plate member 41, and thereby the second assembly 3 is prevented from moving axially and falling out from the protruding portion 13d. The plate member 41 is an elastic member that biases the protruding portions 20e toward the engine side (right side in FIG. 25). The protruding portion 13d engages with the holes 20c, 21c, and 22c of the side plates 20 and 21 and the ring member 22 so that it cannot rotate but can move axially. The side plate 21 abuts a main body of the center plate 13, and thereby axial movement of the second assembly 3 toward the engine side (right side in FIG. 25) is controlled. The distal ends of the protruding portions 20e of the side plate 20 abut the plate member 41, and thereby axial movement of the second assembly 3 toward the transmission side (left side in FIG. 25) is controlled.

The disc spring 16' in the hysteresis portion 2b is disposed between the side plate 11 and the thrust member 14 instead of between the side plate 10 and the thrust member 15. The disc spring 16' is set so that it is supported at its outer circumferential end by the side plate 11 and its inner circumferential end biases the thrust member 14 toward the center plate 13. The thrust member 14 is disposed between the disc spring 16' and the center plate 13, and engages with the side plate 11 so that it cannot rotate but can move axially. The thrust member 15 is sandwiched between the side plate 10 and the center plate 13, and engages with the side plate 10 so that it cannot rotate but can move axially.

The disc spring 29' in the hysteresis portion 3b is disposed between the side plate 20 and the thrust member 27 instead of between the side plate 21 and the thrust member 28. The disc spring 29' is set so that it is supported at its outer circumferential end by the side plate 20 and its inner circumferential end biases the thrust member 27 toward the flange 26b. The thrust member 27 is disposed between the disc spring 29' and the flange 26b, and engages with the side plate 20 so that it cannot rotate but can move axially. The thrust member 28 is sandwiched between the side plate 21 and the flange 26b, and engages with the side plate 21 so that it cannot rotate but can move axially.

Other structures of the twenty third embodiment are identical to those of the third embodiment.

According to the twenty third embodiment, effects similar to the third embodiment are attained.

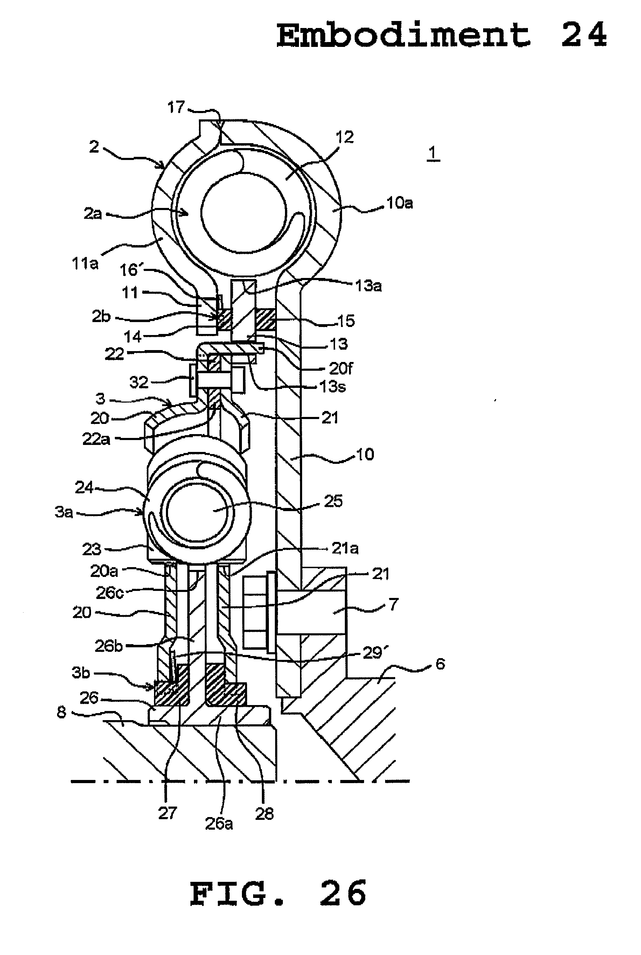

A twenty fourth embodiment of the torque fluctuation absorbing apparatus disclosed here will be explained with reference to the drawings. FIG. 26 is a section view schematically illustrating a structure of the torque fluctuation absorbing apparatus according to a twenty fourth embodiment disclosed here.

The twenty fourth embodiment is a variation of the first embodiment. In the twenty fourth embodiment, as the second connecting member for connecting the second end (corresponding to the center plate 13) of the first assembly 2 to the first end (corresponding to the side plates 20 and 21 and the ring member 22) of the second assembly 3, instead of using a bolt (31 in FIG. 2), the side plates 20 and 21 and the ring member 22 are integrally connected by a rivet 32, a hole 13s that penetrates in the axial direction is provided to the center plate 13, a protruding part 20f is provided to extend from the outer circumferential end of the side plate 20 (the ring member 22 is also possible) toward the engine side (right side in FIG. 26), and the protruding portion 20f engages with the hole 13s so that it cannot rotate but can move axially. The center plate 13 is formed so as not to conflict with the rivet 32.

The disc spring 16' in the hysteresis portion 2b is disposed between the side plate 11 and the thrust member 14 instead of between the side plate 10 and the thrust member 15. The disc spring 16' is set so that it is supported at its outer circumferential end by the side plate 11 and its inner circumferential end biases the thrust member 14 toward the center plate 13. The thrust member 14 is disposed between the disc spring 16' and the center plate 13, and engages with the side plate 11 so that it cannot rotate but can move axially. The thrust member 15 is sandwiched between the side plate 10 and the center plate 13, and engages with the side plate 10 so that it cannot rotate but can move axially.

The disc spring 29' in the hysteresis portion. 3b is disposed between the side plate 20 and the thrust member 27 instead of between the side plate 21 and the thrust member 28. The disc spring 29' is set so that it is supported at its outer circumferential end by the side plate 20 and its inner circumferential end biases the thrust member 27 toward the flange 26b. The thrust member 27 is disposed between the disc spring 29' and the flange 26b, and engages with the side plate 20 so that it cannot rotate but can move axially. The thrust member 28 is sandwiched between the side plate 21 and the flange 26b, and engages with the side plate 21 so that it cannot rotate but can move axially.

Other structures of the twenty fourth embodiment are identical to those of the first embodiment.

According to the twenty fourth embodiment, effects similar to the first embodiment are attained.

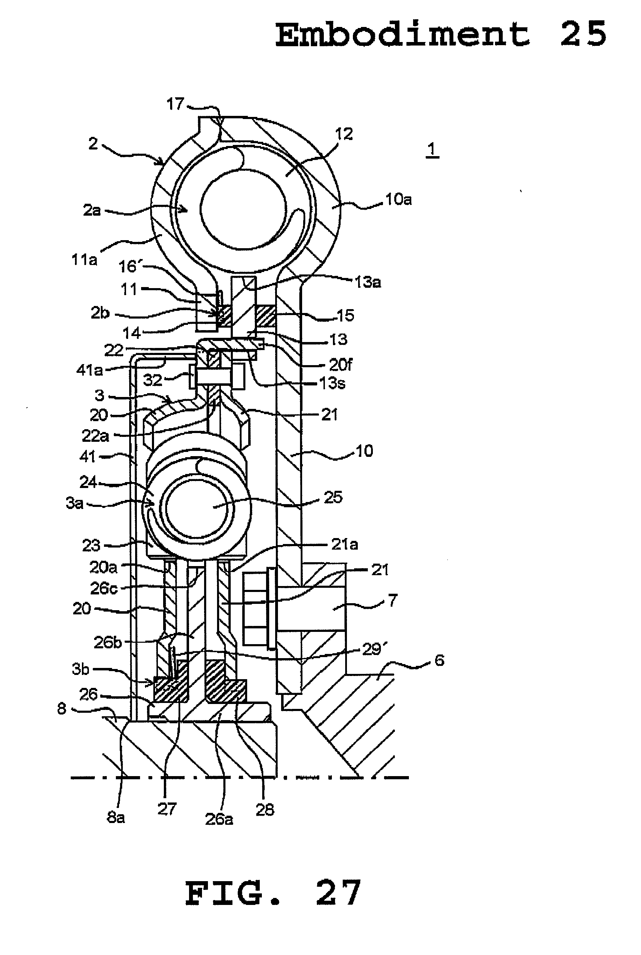

A twenty fifth embodiment of the torque fluctuation absorbing apparatus disclosed here will be explained with reference to the drawings. FIG. 27 is a section view schematically illustrating a structure of the torque fluctuation absorbing apparatus according to a twenty fifth, embodiment disclosed here.

The twenty fifth embodiment is a variation of the twenty fourth embodiment. In the twenty fifth embodiment, movement toward the transmission side (left side in FIG. 27) of the hub portion 26a of the hub member 26 is no longer controlled by the stepped portion 8a of the input shaft 8, and the ring-shaped plate member 41 whose movement toward the transmission side (left side in FIG. 27) is controlled by the stepped portion 8a of the input shaft 8 is fitted (can be fitted to make relative rotation impossible by spline-engagement) onto the input shaft 8. A protruding portion 41a is provided so that the outer circumferential end of the plate member 41 extends toward the engine side (right side in FIG. 27). The distal end of the protruding portion 41a abuts (or presses against) the side plate 20, and thereby the protruding portion 20f is prevented from falling out from the hole 13s upon axial movement of the second assembly 3. Other structures of the twenty fifth embodiment are identical to those of the twenty fourth embodiment.

According to the twenty fifth embodiment, effects similar to the twenty fourth embodiment are attained.

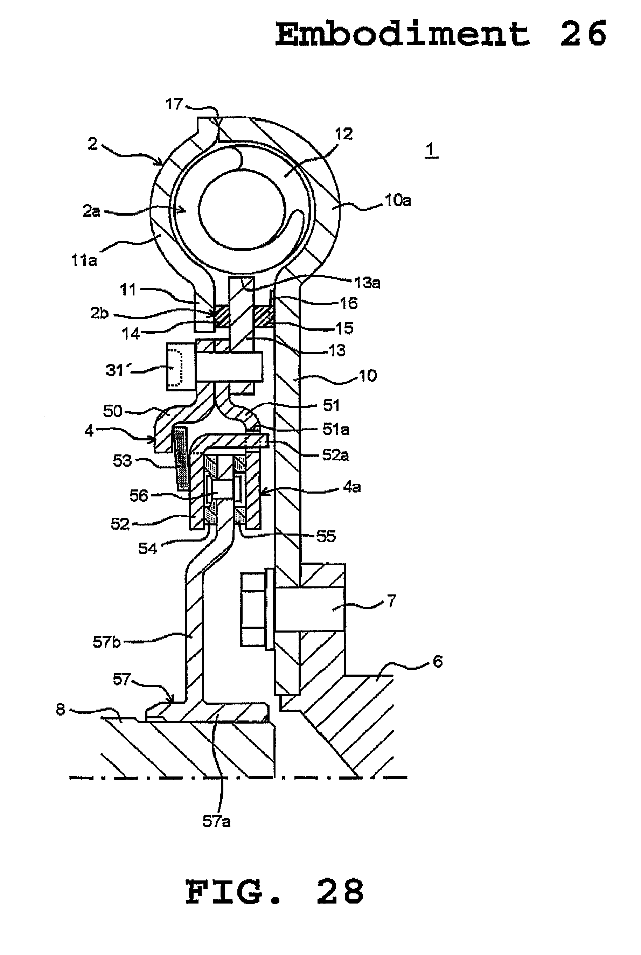

A twenty sixth embodiment of the torque fluctuation absorbing apparatus disclosed here will be explained with reference to the drawings. FIG. 28 is a section view schematically illustrating a structure of the torque fluctuation absorbing apparatus according to a twenty sixth embodiment disclosed here.

The twenty sixth embodiment is a variation of the first embodiment. In the twenty sixth embodiment, the damper portion (3a in FIG. 2) and the hysteresis portion (3b in FIG. 2) are eliminated from a second assembly 4, and a limiter portion 4a is provided therein. The other structures except for the second assembly 4 are identical to those in the first embodiment.

The second assembly 4 absorbs a fluctuating torque generated between the crank shaft 6 and the input shaft 8 and is connected to the first assembly 2 and the input shaft 8. In the second assembly 4, a first end of the drivetrain (corresponding to a support plate 50 and a cover plate 51) is connected to the second end of the drivetrain (corresponding to the center plate 13) in the first assembly 2 by a bolt 31'. The first end (corresponding to a support plate 50 and a cover plate 51) of the second assembly 4 is disposed more toward the transmission side (left side in FIG. 28) than the second end of the first assembly 2 (corresponding to the center plate 13). The second assembly 4 includes, at a location that is more radially inward than the bolt 31', a limiter portion 4a that functions to absorb torsion. The limiter portion 4a generates slippage when torque fluctuation between the crank shaft 6 and the input shaft 8 is beyond the absorption capabilities of the damper portion 2a and the hysteresis portion 2b in the first assembly 2. In the second assembly 4, a second end of the drivetrain (corresponding to a hub member 57) is connected by spline-engagement to the input shaft 8.

The second assembly 4 includes the following main constituent members: a support plate 50, a cover plate 51, a pressure plate 52, a disc spring 53, friction members 54 and 55, a rivet 56, and a hub member 57.

The support plate 50 is a ring-shaped member that supports the outer circumferential end of the disc spring 53, and is a constituent member of the limiter portion 4a. The support plate 50 is joined and integrally fixed at an outer circumferential portion thereof with the cover plate 51 by a rivet (not illustrated; corresponding to the rivet 30 in FIG. 3). The support plate 50 is connected together with the cover plate 51 to the center plate 13 of the first assembly 2 by the bolt 31'. The support plate 50 rotates integrally with the cover plate 51. The support plate 50 separates from the cover plate 51 at an inner circumferential portion thereof. The support plate 50 presses against the outer circumferential end of the disc spring 53.

The cover plate 51 is a ring-shaped member that covers a sliding surface of the limiter portion 4a, and is a constituent member of the limiter portion 4a. The cover plate 51 is joined and integrally fixed at an outer circumferential portion thereof with the support plate 50 by a rivet (not illustrated; corresponding to the rivet 30 in FIG. 3). The cover plate 51 is connected together with the support plate 50 to the center plate 13 of the first assembly 2 by the bolt 31'. The cover plate 51 separates from the support plate 50 at an inner circumferential portion thereof. The cover plate 51 includes a hole 51a for supporting the pressure plate 52 so that it cannot rotate but can move axially. A protruding portion 52a of the pressure plate 52 is inserted into the hole 51a so that it cannot rotate but can move axially. An inner circumferential portion of the cover plate 51 slidably presses against the friction member 55.

The pressure plate 52 is a ring-shaped member disposed between the disc spring 53 and the friction member 54, and is a constituent member of the limiter portion 4a. The pressure plate 52 includes a protruding portion 52a so that it is supported by the cover plate 51 so that it cannot rotate but can move axially. The protruding portion 52a is inserted into the hole 51a of the cover plate 51 so that it cannot rotate but can move axially. The pressure plate 52 is biased toward the friction member 54 by the disc spring 53. The pressure plate 52 is slidably pressed against the friction member 54.

The disc spring 53 is a disc-shaped spring disposed between the support plate 50 and the pressure plate 52, and is a constituent member of the limiter portion 4a. The disc spring 53 is supported at its outer circumferential end by the support plate 50, and its inner circumferential end biases the pressure plate 52 towards the cover plate 51.

The friction member 54 is a ring-shaped constituent member of the limiter portion 4a. The friction member 54 is disposed between a flange 57b of the hub member 57 and the pressure plate 52. The friction member 54 is fixed to the flange 57b by a rivet 56. The friction member 54 is slidably pressed against the pressure plate 52.

The friction member 55 is a ring-shaped constituent member of the limiter portion 4a. The friction member 55 is disposed between the flange 57b of the hub member 57 and the cover plate 51. The friction member 55 is fixed to the flange 57b by a rivet (not illustrated). The friction member 55 is slidably pressed against the cover plate 51.

The hub member 57 outputs a rotative power from the limiter portion 4a to the transmission, and is a constituent member of the limiter portion 4a. The hub member 57 includes the flange 57b that extends radially outward from a predetermined location on the outer periphery of a hub portion 57a. An inner circumferential surface of the hub portion 57a is spline-engaged (engaged so that it cannot rotate but can move axially) with the input shaft 8 of the transmission (not illustrated). The flange 57b is a ring-shaped portion disposed between the friction members 54 and 55 that are between the cover plate 51 and the pressure plate 52. An outer circumferential portion of the flange 57b is disposed between the friction members 54 and 55, and the friction members 54 and 55 are integrally fixed thereto by the rivet 56.

The second connecting member of the second assembly 4 and the first assembly 2 is not limited to the bolt 31' in FIG. 28, and the second connecting member described in the second to twenty fifth embodiments can be used.

According to the twenty sixth embodiment, effects similar to the first embodiment are attained.

Changes and variations to the embodiments and examples of the present invention can be made within the scope of the entire disclosure of the present invention (including the claims and drawings) as well as based on basic technical concepts. Further, various combinations and selections of the various elements disclosed herein can be made within the scope of the claims of the present invention. In other words, the present invention clearly includes various modifications and corrections that could be made by a person skilled in the art in accordance with the entire disclosure of the present invention including the claims and drawings and other technical concepts.
A torque fluctuation absorbing apparatus that includes a first assembly that absorbs a fluctuating torque generated between a first rotating shaft and a second rotating shaft that are arranged coaxially, a first end of the first assembly being connected to the first rotating shaft from the second rotating shaft side by a first connecting member, a second assembly that absorbs a fluctuating torque generated between the first rotating shaft and the second rotating shaft, the second assembly being disposed more toward the second rotating shaft side than the first connecting member and a second end thereof being connected to the second rotating shaft, and a second connecting member that connects a second end of the first assembly to a first end of the second assembly.

## Claims

1. A torque fluctuation absorbing apparatus comprising:
a first assembly that absorbs a fluctuating torque generated between a first rotating shaft and a second rotating shaft that are arranged coaxially, a first end of the first assembly being connected to the first rotating shaft from the second rotating shaft side by a first connecting member,
a second assembly that absorbs a fluctuating torque generated between the first rotating shaft and the second rotating shaft, the second assembly being disposed more toward the second rotating shaft side than the first connecting member and a second end thereof being connected to the second rotating shaft, and
a second connecting member that connects a second end of the first assembly to a first end of the second assembly.

2. The torque fluctuation absorbing apparatus according to claim 1, wherein the first assembly includes a first damper portion that absorbs a fluctuating torque generated between the first rotating shaft and the second rotating shaft by an elastic force, and
the second assembly includes a second damper portion that absorbs a fluctuating torque generated between the first rotating shaft and the second rotating shaft by an elastic force, or a limiter portion that generates slippage when a fluctuating torque is beyond the absorption capabilities of the first damper portion.

3. The torque fluctuation absorbing apparatus according to claim 2, wherein the second assembly is disposed more radially inward than the first damper portion of the first assembly.

4. The torque fluctuation absorbing apparatus according to any one of claims 1 to 3, wherein a second end of the second assembly is connected to the second rotating shaft by spline-engagement.

5. The torque fluctuation absorbing apparatus according to any one of claims 1 to 4, wherein the first end of the second assembly is disposed more toward the second rotating shaft side than the second end of the first assembly, and
the second connecting member is a bolt that connects the first end of the second assembly to the second end of the first assembly.

6. The torque fluctuation absorbing apparatus according to any one of claims 1 to 4, wherein the first end of the second assembly is disposed more radially inward than the second end of the first assembly, and
the second connecting member includes an inner spline formed on an inner circumferential surface of the second end of the first assembly and an outer spline that is formed on an outer circumferential surface of the first end of the second assembly and spline-engages with the inner spline.

7. The torque fluctuation absorbing apparatus according to any one of claims 1 to 4, wherein the second connecting member includes a plurality of protruding portions that are formed on the second end of the first assembly and protrude toward the second rotating shaft, and a plurality of holes formed on the first end of the second assembly and through which the protruding portions are inserted, and
the protruding portions engage with the holes so that their movement in the circumferential direction and the radial direction is controlled relative to the first end of the second assembly.

8. The torque fluctuation absorbing apparatus according to claim 7, wherein the protruding portions each include a claw portion that hooks onto the first end of the second assembly at a distal end that penetrates through the holes, and the protruding portions are elastically deformable in the radial direction or the circumferential direction inside the holes,
and
the movement in the axial direction of the first end of the second assembly is controlled by a main body of the second end of the first assembly and the claw portions.

9. The torque fluctuation absorbing apparatus according to claim 8, wherein the protruding portions are forked protruding portions whose distal ends are split into two in the radial or circumferential direction, and
the claw portion is formed on both sides in the radial direction or the circumferential direction of the distal end that penetrates through the holes in each forked protruding portion.

10. The torque fluctuation absorbing apparatus according to claim 7, wherein the protruding portions include a groove on a surface in the radial direction or the circumferential direction of the distal end that penetrates through the holes, and a stopper that is fitted onto the groove, and
the movement in the axial direction of the first end of the second assembly is controlled by a main body of the second end of the first assembly and the stoppers.

11. The torque fluctuation absorbing apparatus according to any one of claims 1 to 4, wherein the second connecting member includes a pin member that includes a jaw portion that penetrates through the first end of the second assembly and the second end of the first assembly and hooks onto the first end of the second assembly, a forked pin portion whose distal end is split into two, and a claw portion at each distal end of the forked pin portion that hooks onto the second end of the first assembly, and
the movement in the axial direction of the first end of the second assembly is controlled by a main body of the second end of the first assembly and the jaw portion.

12. The torque fluctuation absorbing apparatus according to claim 7, further comprising a spacer that is disposed between the second end of the first assembly and the first end of the second assembly and includes a hole through which the protruding portions are inserted.

13. The torque fluctuation absorbing apparatus according to claim 7 or 12, further comprising an elastic member that is disposed between a stepped portion of the second rotating shaft and the second end of the second assembly, and biases the second end of the second assembly toward the first rotating shaft.

14. The torque fluctuation absorbing apparatus according to claim 7 or 12 or 13, wherein the first assembly includes a hysteresis portion that alleviates a fluctuating torque generated between the first rotating shaft and the second rotating shaft by means of a hysteresis torque,
the hysteresis portion includes a thrust member sandwiched between the first rotating shaft and the second rotating shaft, and
the thrust member includes a retaining portion that prevents the second assembly from falling out from the protruding portions.

15. The torque fluctuation absorbing apparatus according to any one of claims 1 to 4, wherein the second connecting member includes a plurality of protruding portions that are formed on the first end of the second assembly and protrude toward the first rotating shaft, and a plurality of holes that are formed on the second end of the first assembly and through which the protruding portions are inserted, and
the protruding portions engage with the holes so that their movement in the circumferential direction and the radial direction is controlled relative to the second end of the first assembly.
